# FASCICULE DE BREVET EUROPEEN

(11) **EP 0 593 341 B1**
(45) Date de publication et mention de la délivrance du brevet: **19.04.2000**
(21) Numéro de dépôt: 93402472.0
(22) Date de dépôt: 07.10.1993
(51) Int. Cl.: G06F 17/30

(54) **Procédé d'aide à l'optimisation d'une requête d'un système de gestion de base de données relationnel et procédé d'analyse syntaxique en résultant**
Hilfsverfahren zur Abfrageoptimierung eines relationellen Datenbankverwaltungssystems und daraus resultierendes syntaktisches Analyseverfahren
Query optimisation help method of a relational database management system and resulting syntactic analysis method

(30) Priorité: 12.10.1992 FR 9212149
(43) Date de publication de la demande: 20.04.1994
(73) Titulaire: BULL S.A., 78430 Louveciennes (FR)
(72) Inventeur: Cadot, Michel, F-94100 Saint-Maur (FR)
(74) Mandataire: Denis, Hervé

(56) Documents cités:
- PROCEEDINGS OF THE FIFTH INTERNATIONAL CONFERENCE ON DATA ENGINEERING 10 Février 1989 , LOS ANGELES, CALIFORNIA, US pages 590 - 597 BENG CHIN OOI ET AL. 'Extending a DBMS for geographic applications'

## Description

L'invention se rapporte à un procédé d'aide à l'optimisation d'une requête d'un système de gestion de base de données relationnel, désigné plus couramment par son acronyme SGBDR. Elle s'applique plus particulièrement à l'administration du SGBDR. Elle se rapporte aussi à un procédé d'analyse syntaxique en résultant.

Une base de données peut être définie comme étant un ensemble intégré de données modélisant un univers donné. Les données utilisées par des applications diverses sont regroupées dans une même base de façon à éviter les problèmes de duplication des données. A une base de données est associé un schéma conceptuel qui décrit la structure et le type des données qu'elle contient et les contraintes qui doivent être toujours vérifiées. L'administrateur de la base de données a la charge de veiller à la vérification de ces contraintes.

L'administration des données a trois rôles. D'abord, elle définit les utilisateurs de la base de données, en leur donnant un nom, un mot de passe et un ensemble de privilèges ou droits pour accéder aux données. Elle définit aussi le ou les administrateurs, qui sont les personnes habilitées à faire en partie ou en totalité l'administration de la base de données. Le second rôle de l'administration est d'attribuer à l'administrateur la définition ou de le faire participer à la définition du schéma conceptuel de la base de données. L'administrateur définit donc les schémas des différentes tables et les règles relatives à ces tables. Dans son dernier rôle, l'administrateur a la possibilité de tirer profit en termes de performance, d'intégrité et de sécurité du schéma conceptuel de la base et du SGBDR. C'est sur ce troisième rôle que porte essentiellement l'objet de la présente invention.

Lors du développement d'une application du SGBDR, un administrateur a pour rôle d'optimiser l'utilisation des ressources du SGBDR. Quand une requête est faite lors de l'application, le SGBDR choisit un chemin d'accès pour l'exécution de la requête. Pour optimiser les performances de l'application, l'administrateur doit analyser les requêtes émises et décider de l'action à prendre. Son action peut être de changer la forme de la requête et/ou de créer ou supprimer des index sur les tables concernées. Sa décision dépend des informations lui indiquant si la forme actuelle de la requête est suffisante ou non, ou si les index existants sont pertinents.

Les index sont physiquement indépendants des données et peuvent ainsi être supprimés et créés à tout moment. Un index est utilisé lors de l'accès aux données, indépendamment de celui qui l'a créé. Une table peut avoir plusieurs index en même temps. Un compromis est à trouver entre le nombre d'index et la surcharge (overhead) causée par leur mise à jour. Un index peut porter sur plusieurs colonnes et dans ce cas il peut assurer l'unicité des colonnes utilisées. Il améliore aussi les performances des requêtes dont la condition de sélection fait intervenir plusieurs colonnes. Une requête avec plusieurs prédicats peut utiliser des index multiples s'ils sont uniques, si les prédicats sont des égalités et sont définis sur la même table. Dans ce cas, les résultats partiels provenant de chaque index sont fusionnés pour constituer le résultat définitif. Certains SGBDR peuvent utiliser les propriétés des index et les caractéristiques des colonnes pour décider quel index prendre et éviter ainsi l'opération de fusion. L'utilisation ou non d'un index est décidée par l'optimiseur du SGBDR. La décision varie selon le type de SGBDR.

D'autre part, le schéma d'un SGBDR peut évoluer dynamiquement. Par exemple, un ou plusieurs champs peuvent être ajoutés à une table, des index peuvent être créés sur une table. Dans ce contexte, il peut s'avérer que le SGBDR ne passe pas par un index qu'il devrait utiliser ou qu'il passe par un index qu' il ne devrait pas utiliser si, par exemple, on accède à plus de 10% des articles. Dans ce dernier cas l'index devient pénalisant. A cause de toutes les possibilités de choix du SGBDR pour établir son plan, on estime que l'exploitation des ressources peut varier dans un rapport de 1 à 10 000 selon la formule de la requête et le choix des index.

Actuellement, l'optimisation d'une requête est compliquée. D'abord, elle n'est pas automatique et il faut avoir recours à des outils spécifiques du SGBDR pour demander le plan d'exécution de la requête. Ce plan est l'enchaînement des opérations qui seront exécutées par le serveur de base de données pour traiter la requête. Pour demander ce plan, l'utilisateur doit écrire la requête dans le langage de requête du SGBDR. L'écriture de la requête demande donc une bonne connaissance du langage de requête du SGBDR. De plus, elle est rigoureuse et ardue et se traduit par une grande perte de temps aggravée par les risques d'erreur qui s'ensuivent. En réponse, le SGBDR fournit, sous une forme variable selon le SGBDR, les résultats de la demande du plan d'exécution de la requête. Le plan est écrit dans le langage de requête du SGBDR et se présente par exemple couramment sous la forme d'une longue table à colonnes multiples. La table est écrite en mode ligne et ne peut apparaître que page à page sur l'écran. L'analyse de la table est alors très compliquée et l'utilisateur la facilite ordinairement en demandant une impression de la table sur papier. Il doit donc recourir à tous les processus d'impression spécifiques au terminal. L'impression se fait page à page, avec rappel des titres des colonnes à chaque page. Par conséquent, l'administrateur doit décrypter dans le langage codé la hiérarchie du traitement de la requête et reconstituer le plan par analyse de nombreuses colonnes et d'un grand nombre de lignes désordonnées dans différentes pages. Cette recherche est donc longue et pénible. En outre, l'administrateur ne dispose pas d'une vue globale du plan, qui serait ordinairement trop longue à obtenir et trop pénalisante par rapport à l'avantage qu'il en tirerait. L'administrateur doit cependant surmonter tant bien que mal cet inconvénient pour décider de la façon d'optimiser la requête. Si par exemple il modifie la requête, il faut qu'il réécrive la requête modifiée, qu'il analyse la nouvelle table et qu'il la compare avec l'ancienne table. Les outils utilisés pour créer une table d'analyse ne gardent pas en mémoire la table précédente et il faut donc l'imprimer de façon à pouvoir s'y référer pour faire la comparaison avec la nouvelle table. La comparaison consiste donc en pratique à cumuler les analyses longues et difficiles des deux tables. Enfin, il manque à l'administrateur une visualisation d'informations sur les objets utilisés lors du traitement. On comprend dans ces conditions que l'optimisation d'une requête est difficile à atteindre rapidement, même pour un administrateur compétent.

Une approche a été proposée pour faciliter la visualisation et l'interprétation du plan d'exécution d'une requête, afin de pouvoir optimiser rapidement et à moindre coût le traitement de la requête. Cette approche avait le double avantage d'offrir une représentation graphique du plan d'exécution de la requête et d'être indépendante de l'optimiseur et du langage de requête du SGBDR. Selon une variante de réalisation préférée de cette approche, cette aide à l'optimisation pouvait même être faite par tout utilisateur qui ne connait pas le langage de requête du SGBDR. Cette approche est décrite dans la demande de brevet connexe de la demanderesse, EP-A-0 593 354, dont la priorité était déposée le même jour.

Cette demande de brevet connexe propose un procédé d'aide à l'optimisation d'une requête d'un SGBDR, le procédé utilisant des informations représentatives du plan d'exécution de la requête, caractérisé en ce qu'il consiste à analyser lesdites informations pour y sélectionner au moins lesdites opérations et pour déterminer les liens entre lesdites opérations, et à visualiser sur un écran un arbre représentatif du plan d'exécution de la requête, l'arbre comprenant des boîtes indiquant lesdites informations sélectionnées correspondantes, ainsi que lesdits liens.

Cet arbre se présente sous la forme de boîtes reliées entre elles par leurs liens de filiation. Chacune des boîtes de l'arbre porte en titre le nom de l'opération concernée et en sous-titre son option éventuelle. Avantageusement on y ajoute une caractéristique éventuelle de l'opération, telle que le nom de l'objet et optionnellement le nom du propriétaire de l'objet sur lequel s'applique l'opération. Un perfectionnement consiste à écrire cette caractéristique dans un bouton de la boîte et à cliquer sur le bouton pour demander des informations additionnelles sur l'objet relatif au bouton. Par exemple, si l'opération s'exécutant sur l'objet cliqué est une table, les informations additionnelles comprennent des éléments descriptifs de la table. Si, d'autre part, l'opération sur l'objet cliqué est un index, les informations additionnelles comprennent un histogramme.

En résumé, les données fournies par l'arbre d'exécution d'une requête peuvent être toutes celles contenues dans le plan d'exécution écrit dans le langage de requête du SGBDR. Grâce au perfectionnement, l'utilisateur peut aussi obtenir des informations supplémentaires sur certaines des ces données. On comprend que cet arbre fournit à l'utilisateur un puissant outil d'aide à l'optimisation d'une requête.

Des études ont été faites pour en accroître la puissance. Elles se sont heurtées à un problème majeur, qui va être illustré par un exemple très simple pour en faciliter la compréhension. On suppose que le SGBDR travaillant en langage SQL concerne la livraison des voitures automobiles et contient une table appelée Type_Car. Par exemple, cette table comprend dans ses colonnes le type de voiture Type, la marque Mark, le prix Price et la puissance Power. On suppose maintenant que l'utilisateur de cette table demande les types de voitures portant la marque XXX. L'utilisateur écrira donc dans le langage SQL la requête suivante :
- SELECT: Type
- FROM: Type_Car
- WHERE: Mark='XXX'

La table représentative du plan d'exécution de la requête ne prend donc en compte que les objets de la requête, à savoir Type_Car. Dans la requête, les autres éléments relatifs à la clause WHERE indiquent seulement au SGBDR de se référer à la colonne Mark et d'y sélectionner la marque XXX et les éléments relatifs à la clause SELECT indiquent au SGBDR de retourner seulement l'information Type dans le résultat. Cependant, il est clair que ces éléments ne sont pas pris en compte dans la table représentative du plan d'exécution de la requête. En d'autres termes, cette table perd les autres éléments de la requête, à savoir Type, Mark et la référence XXX dans la requête illustrée.

Etant donné que l'arbre d'exécution de la requête est construit à partir de la table représentative du plan d'exécution de cette requête, les éléments perdus de cette table ne peuvent pas apparaître dans l'arbre. Par conséquent, il est impossible d'incorporer dans l'arbre ces éléments perdus en utilisant le procédé antérieur d'aide à l'optimisation de la requête. Le perfectionnement de cette aide était donc impossible.

Pourtant, l'incorporation de ces éléments manquants dans les boîtes de l'arbre offrirait à l'utilisateur de nombreux avantages. D'abord, la mention Mark='XXX' aurait l'avantage d'être une image de la requête. La table représentative du plan d'exécution de la requête ne contiendrait plus seulement les résultats de la recherche du plan d'exécution de la requête, mais elle inclurait aussi la condition qui a conduit à ces résultats. Il faut comprendre que l'exemple précité a été volontairement simplifié au maximum, et qu'en pratique une requête est beaucoup plus compliquée. L'insertion de tous les éléments de la requête procurerait à l'utilisateur une image réelle de cette requête en plus de son résultat, et lui permettrait d'apprécier mieux leur connexion. Cette appréciation de leur connexion aurait pour avantage majeur de limiter le choix des modifications à apporter pour l'optimisation de la requête et de mieux formuler les modifications. En d'autres termes, l'incorporation des éléments manquants serait un guide précieux pour amener facilement et rapidement un utilisateur non spécialiste du langage de requête du SGBDR à optimiser au mieux l'exécution de la requête.

L'invention présente un procédé permettant d'obtenir tout ou partie des éléments descriptifs d'une requête pour aider simplement et rapidement un utilisateur, même non spécialiste du langage de requête du SGBDR, à optimiser au mieux l'exécution de la requête.

L'invention a pour objet un procédé d'aide à l'optimisation d'une requête d'un SGBDR, tel que défini par la revendication 1.

Le procédé d'analyse syntaxique de la requête de SGBDR consiste à analyser le fonctionnement du SGBDR afin de déterminer notamment les types des noeuds du graphe syntaxique et de préférence des informations associées à ces types.

L'analyse syntaxique peut comprendre la détermination des opérations exécutées par le SGBDR et de l'ordre dans lequel ces opérations sont exécutées. Cet ordre a pour avantage d'établir une relation entre la requête et le plan d'exécution. Il a aussi comme autre avantage de définir les conditions de détermination des types des noeuds du graphe et des informations associées.

Les caractéristiques et avantages de l'invention ressortiront de la description qui suit, donnée à titre d'exemple et illustrée dans les dessins annexés.

Dans les dessins :
- la figure 1 illustre à titre d'exemple de l'art antérieur une table représentative du plan d'exécution écrit dans le langage de requête d'un SGBDR et relatif à la requête représentée sur la figure 2C ;
- les figures 2A, 2B et 2C illustrent des écrans d'accueil obtenus d'un outil conforme à l'invention mettant en oeuvre le procédé de l'invention ;
- la figure 3 illustre un exemple d'arbre d'exécution de la requête représentée sur la figure 2C, obtenu par la mise en oeuvre du procédé conforme à l'invention pour l'aide à l'optimisation de la requête ;
- les figures 4A, 4B et 4C illustrent des histogrammes pouvant être obtenus par la mise en oeuvre du procédé conforme à l'invention ;
- les figures 5A-5N illustrent des critères pour l'analyse syntaxique de requête mise en oeuvre par le procédé de l'invention ;
- la figure 6 illustre un graphe résultant de l'analyse syntaxique de requête faite conformément aux critères d'analyse définis dans les figures 5A-5N ;
- la figure 7 illustre une association de noeuds prévisibles entre un arbre d'exécution d'une requête et un graphe d'analyse de la requête ;
- la figure 8 illustre un placement des projections pour l'association de l'arbre avec le graphe ;
- les figures 9A-9D illustrent un premier exemple de placement des tests pour l'association de l'arbre avec le graphe ;
- les figures 10A et 10B illustrent un second exemple de placement des tests pour l'association de l'arbre avec le graphe ;
- la figure 11 illustre un réseau représentatif d'une requête complète obtenu par la mise en oeuvre du procédé de l'invention ;
- les figures 12A-12H illustrent diverses étapes d'un mode de réalisation du procédé de l'invention ; et
- la figure 13 illustre un arbre complet conforme à l'invention pour l'exécution d'une requête.

Pour des raisons de clarté et de simplicité, la description portera sur un exemple non limitatif de SGBDR connu sous la marque déposée Oracle V6, produit par la société Oracle Corp, utilisant le langage normalisé SQL (Structured Query Language) et opérant sur une station Unix, marque déposée par la société American Telephone and Telegraph. L'exemple illustré concernera les requêtes de type SELECT de ce SGBDR, étant bien entendu que cet exemple n'est limitatif ni à ce type dans ce SGBDR ni aux autres SGBDR.

L'architecture fonctionnelle d'Oracle est organisée en quatre couches concentriques, qui sont successivement à partir du centre : le noyau, le dictionnaire, la couche SQL et la couche externe. Les trois premières couches sont appelées couches fondamentales.

Le noyau communique avec la base de données et peut se connecter avec d'autres noyaux dans un environnement de base de données réparties. L'une de ses fonctions essentielles est l'exécution optimale des requêtes, grâce à un optimiseur intégré de requête SQL.

Le dictionnaire des données est une métabase. Il est constitué d'un ensemble de tables et de vues qui sont manipulées à l'aide du langage SQL. Son contenu reflète une image de la base à tout instant et donne ainsi une description dynamique de la base de données. Il permet de décrire notamment les objets de la base (tables, colonnes, vues, index,...), les privilèges et les droits des utilisateurs sur les différents objets. Le dictionnaire est utilisé pour l'administration de la base de données si l'utilisateur a un privilège d'administration. Un utilisateur est considéré comme administrateur s'il a le privilège DBA. Lors de l'installation du système, deux utilisateurs sont considérés comme administrateurs : SYS et SYSTEM. Seul l'administrateur SYS a accès aux tables du dictionnaire de données.

La couche SQL est la dernière couche fondamentale d'Oracle. Elle joue le rôle d'interface entre le noyau et les outils de la couche externe. Ainsi, toute opération d'accès aux données est exprimée en langage SQL.

Enfin, la couche externe est composée d'outils facilitant le développement d'applications et l'utilisation de toutes les fonctionnalités offertes par les trois couches fondamentales. L'un de ces outils est SQL*Plus, qui est une interface interactive de quatrième génération avec la couche SQL. Toute commande SQL peut être lancée de SQL*Plus. Il permet notamment le paramétrage de l'environnement de travail (longueur d'une ligne par pages, nombre de lignes par page,...) et le formatage des résultats des requêtes SQL sur écran ou sur papier. Un autre outil est SQL*DBA orienté vers l'administration de la base de données.

Pour la bonne compréhension de la présente description, on rappellera aussi brièvement les opérations importantes d'Oracle :
- CONCATENATION :: exécution de l'opération OR en faisant appel à des index. Oracle offre deux manières d'exécuter un OR.
- FILTER :: si cette opération a deux branches, on vérifie pour chaque tuple du premier fils l'existence d'un flux venant du deuxième fils. Si ce flux existe, FILTER laisse passer le tuple. Cette opération intervient dans les clauses SELECT imbriquées. Si le FILTER n'a qu'une branche, son algorithme est différent pour laisser passer les tuples qui rendent vraie une formule à valeur binaire. Cette opération remplace alors la clause HAVING.
- INDEX :: fait un accès à un index. Cette opération peut apparaître seule ou suivie d'une opération TABLE ACCESS, selon que les valeurs de l'index sont utilisées directement ou servent à sélectionner des tuples de la table.
- MERGE JOIN :: c'est la seule opération qui réalise une jointure ensembliste. Elle fait la jointure des deux ensembles préalablement triés. Elle est utilisée sur des jointures dont le test est une égalité et dont aucun champ n'est indexé.
- NESTED LOOPS :: pour chaque tuple venant du premier fils, on fait le produit cartésien avec les tuples venant du second fils.
- TABLE ACCESS :: fait un accès à une table et peut faire des restrictions.
- SORT UNIQUE :: élimination des doubles faite avant les opérations ensemblistes UNION, MINUS, INTERSECT et utilisée pour l'option UNIQUE de la clause SELECT.
- SORT JOIN :: fait un tri sur les champs de jointure avant l'opération MERGE JOIN.
- SORT ORDER BY :: trie selon les spécifications de la clause ORDER.
- SORT GROUP BY :: exécute les agrégats des clauses SELECT et HAVING et trie selon les spécifications de la clause GROUP BY.

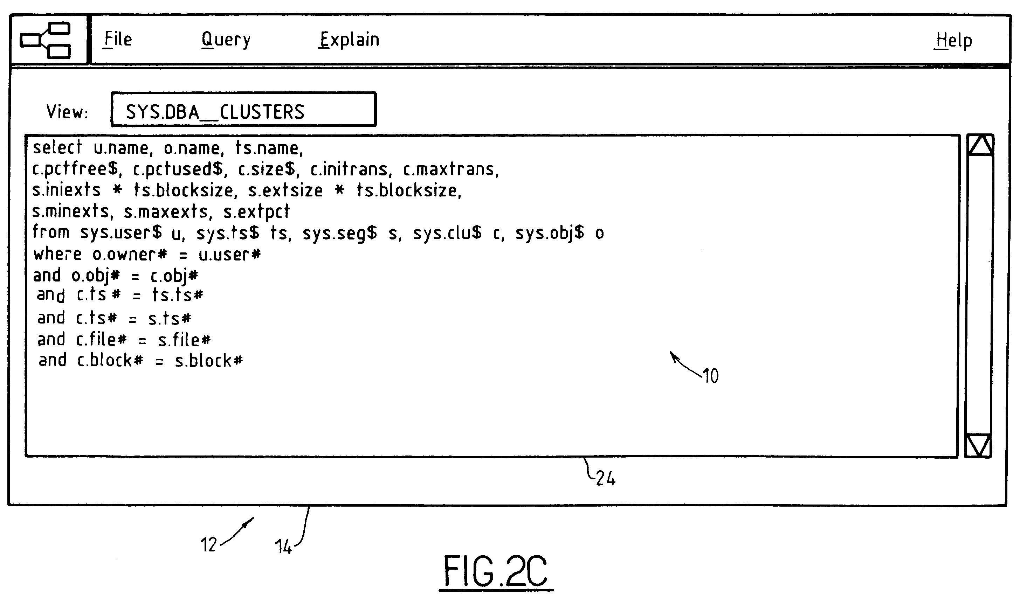

Le procédé classique d'aide à l'optimisation d'une requête d'un SGBDR comprend la recherche d'un plan d'exécution de la requête écrit dans le langage de requête du SGBDR. La figure 2C présente dans une fenêtre d'écran un exemple de requête 10 écrite dans le langage de requête SQL d'Oracle. Dans Oracle, la recherche du plan d'exécution de la requête 10 peut se faire en utilisant l'outil SQL*Plus ou SQL*DBA. On écrit la requête 10 et, en réponse, l'outil construit une table représentative du plan choisi par le noyau du SGBDR pour l'exécution de la requête. Cette table doit être préalablement créée par l'utilisateur et peut être consultée par les commandes SQL de sélection.

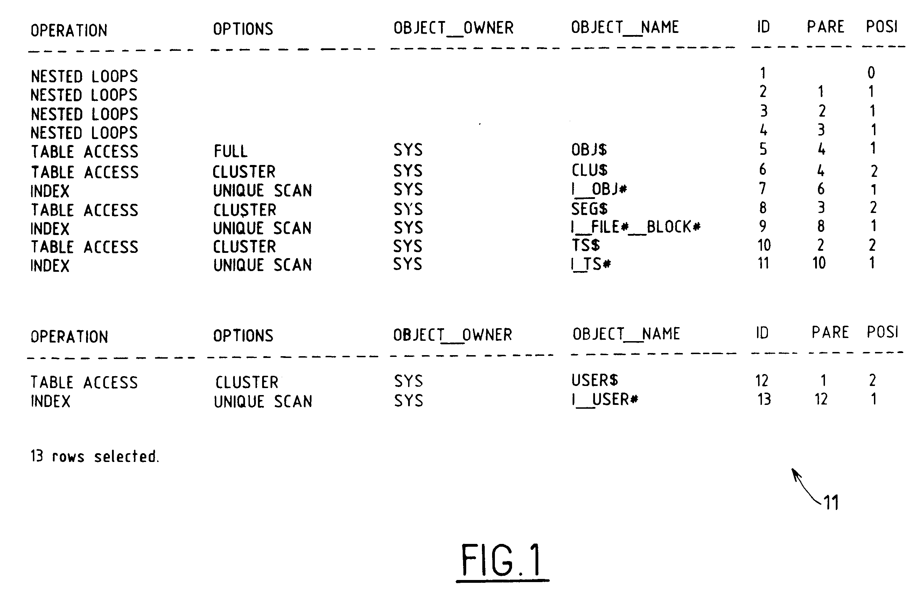

La figure 1 illustre un exemple, très court pour la commodité de l'exposé, d'une table 11 obtenue par impression page à page de la table correspondante qui a été créée par le SGBDR sur demande de l'utilisateur. La table 11 se compose de deux pages rappelant chacune les titres des sept colonnes représentatives successivement des opérations (OPERATION), des options (OPTION), du propriétaire de l'objet (OBJECT_OWNER), du nom de l'objet (OBJECT_NAME), et pour chaque opération, son numéro (ID), le numéro de l'opération qui la précède (PARE) et sa position (POSI) si l'opération a des opérations soeurs. La simple requête 10 illustrée dans la figure 2C donne une idée d'une table relative à une requête ordinaire et fait bien ressortir le grave problème qu'elle pose à l'utilisateur pour optimiser l'exécution de la requête. Dans la pratique, seul l'utilisateur compétent qu'est l'administrateur peut interpréter cette table. On comprend aussi que même pour l'administrateur l'interprétation de la table est en règle générale longue et pénible. En outre, il n'a de cette façon aucune vision globale du plan d'exécution. L'invention présente une solution évitant le recours d'une personne ayant des connaissances très élevées de l'administration d'un SGBDR.

Selon une caractéristique de l'invention, un outil de recherche appelé DB*EXPLAIN a été créé pour d'abord proposer à l'utilisateur de créer automatiquement la table représentative du plan d'exécution d'une requête. Selon un avantage accessoire de cet outil, l'administrateur n'a pas à écrire une requête dans le langage SQL.

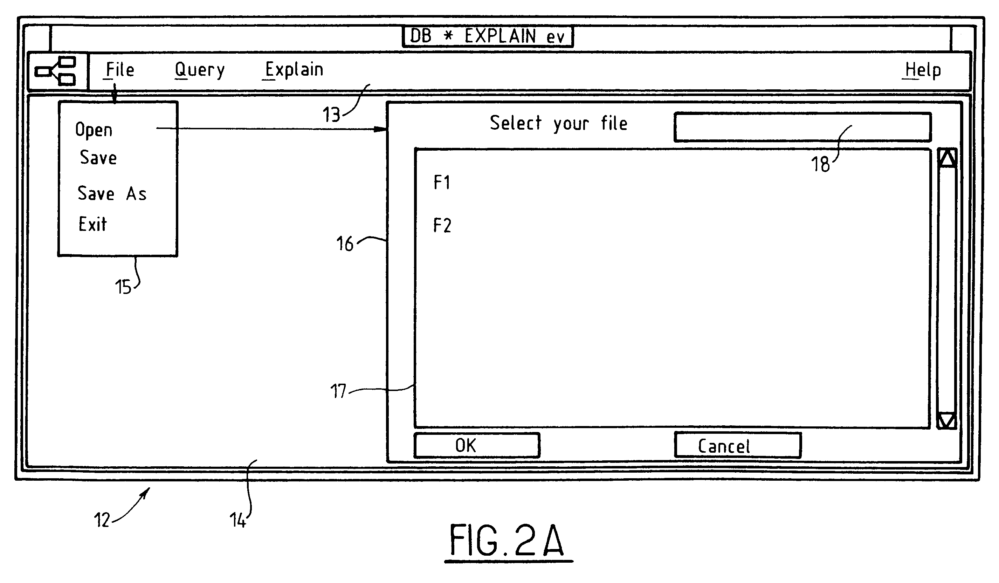

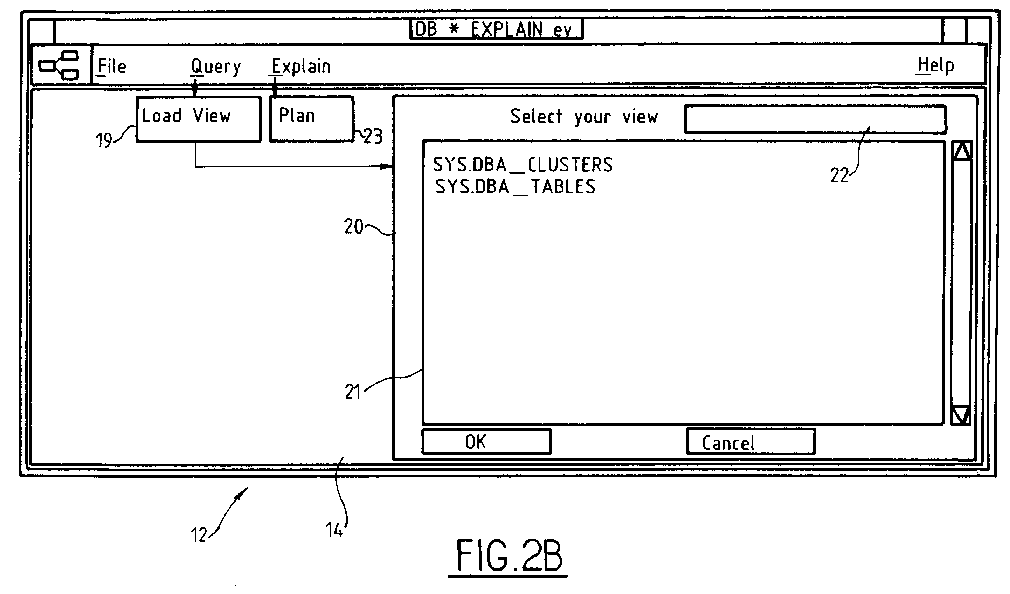

Les figures 2A, 2B et 2C illustrent à titre d'exemple un écran d'accueil 12 de l'outil DB*EXPLAIN. Cet exemple a été créé en utilisant le logiciel OSF/Motif, marque déposée de Open Software Foundation, Inc aux U.S.A. L'écran 12 contient une barre de menus 13 et une fenêtre de dialogue 14. La barre de menus 13 comprend trois menus principaux File, Query et Explain. Le menu 15 de File est représenté sur la figure 2A et se rapporte aux requêtes contenues dans des fichiers. Il présente quatre options Open, Save, Save As et Exit. En cliquant sur l'option Open, une fenêtre de sélection 16 se présente dans la fenêtre de dialogue 14. La fenêtre de sélection 16 incorpore de façon normalisée une liste déroulante 17 des fichiers courants (F1, F2, ...) contenant des requêtes et un pavé 18 permettant d'écrire le nom d'un fichier à sélectionner. En cliquant sur l'option Save du menu 15 de File, on sauve le fichier désiré sous le nom qu'il porte déjà. En cliquant sur l'option Save As, on sauve le fichier désiré sous le nom choisi et écrit par l'utilisateur. Enfin, on clique sur l'option Exit pour sortir de DB*EXPLAIN.

La figure 2B illustre à titre d'exemple le menu 19 de Query dans l'écran d'accueil 12. Il n'incorpore qu'une option Load View servant à ouvrir une fenêtre de sélection 20 incorporant une liste déroulante 21 des vues contenues dans le dictionnaire du SGBDR comme autre source de requêtes (vues SYS.DBA_CLUSTERS et SYS.DBA_TABLES dans l'exemple illustré) et un pavé 22 permettant d'écrire le nom d'une vue désirée. La figure 2B fait aussi apparaître le menu 23 d'Explain, qui incorpore seulement l'option Plan. En cliquant sur cette option, l'outil DB*EXPLAIN construit, avantageusement de la même façon que les outils SQL*Plus et SQL*DBA, une table représentative du plan d'exécution de la requête. Il serait évidemment possible d'adapter l'outil DB*EXPLAIN pour qu'il puisse représenter cette table dans une fenêtre d'édition, de la même manière que la table 11 représentée sur la figure 1. Cependant, le procédé de l'invention adapté à l'exemple illustré n'a besoin que de la table pour fournir une représentation du plan d'exécution nettement meilleure que la table 11 illustrée, de sorte qu'en pratique cette représentation est superflue.

La figure 2C illustre une fenêtre d'édition 24 produite dans la fenêtre de dialogue 14 pour la représentation d'une requête issue d'un fichier sélectionné dans la liste déroulante 17 ou défini dans le pavé 18 de l'écran illustré dans la figure 2B, ou de la vue sélectionnée dans la liste déroulante 21 ou définie dans le pavé 22 de la figure 2B. La figure 2C illustre dans la fenêtre d'édition 24 la requête 10 qui est présentée à titre d'exemple en ayant sélectionné la vue SYS.DBA_CLUSTERS dans la liste 21 de la figure 2B. Cette vue se rapporte aux clusters de la base de données et appartient à l'administrateur SYS. Grâce à l'outil DB*EXPLAIN, il n'est donc plus besoin d'écrire une requête déjà disponible. Cet outil offre donc l'avantage majeur de n'avoir pas à concevoir et réécrire la requête et d'éviter tous les risques d'erreur et les pertes de temps qui s'ensuivent. Un autre avantage est de pouvoir modifier directement et facilement le contenu de la requête qui se présente dans la fenêtre d'édition 24, grâce à l'utilisation, dans le mode de réalisation choisi à titre d'exemple préféré, du logiciel OSF/Motif.

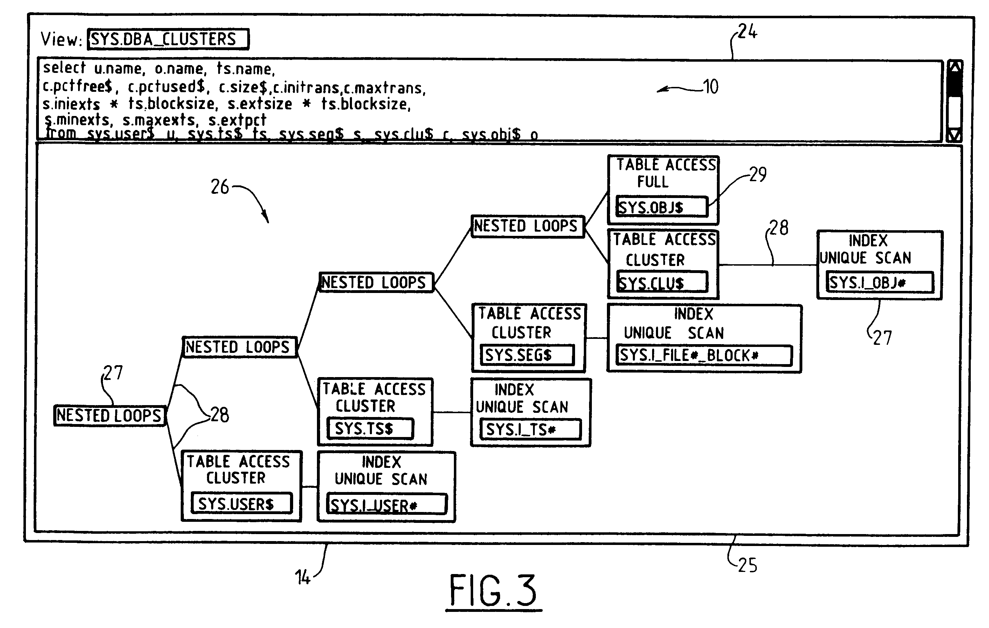

Une des phases du procédé de l'invention consiste à construire, à partir du plan d'exécution de la requête 10, un arbre d'exécution de la requête et à représenter l'arbre sur un écran. Dans l'écran représenté sur la figure 3, une fenêtre 25 contient un arbre 26 représentatif du d'exécution de la requête 10. L'arbre 26 est fait de boîtes 27 reliées entre elles par des liens 28. La construction des liens 28 de l'arbre 26 a été faite par analyse du résultat de la demande du plan d'exécution de la requête écrit dans le langage de requête du SGBDR, ce résultat étant la table 11 pour le SGBDR choisi à titre d'exemple. L'analyse de la requête 10 a été avantageusement faite en pratique par des structures en langage C qui pointent sur des structures affiliées pour construire un graphe purement logiciel. Selon un exemple très simple et suffisant à lui seul pour la mise en oeuvre de cette seule phase du procédé conforme à l'invention, la structure associée à chacun des noeuds constitués par les boîtes 27 de l'arbre 26 peut être simplement produite à partir de la table produite par Explain Plan sous la forme suivante :

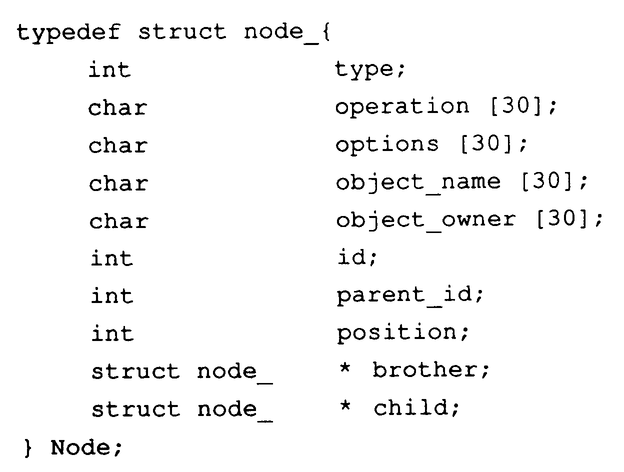

A chaque fois qu'un tuple est rendu, une des boîtes 27 est créée de manière classique et aisée par l'homme du métier en utilisant par exemple une fonction des bibliothèques graphiques du logiciel OSF/Motif. On verra ultérieurement, en référence avec le fichier struct.h annexé, un autre exemple de réalisation adapté à l'ensemble des phases constituant le procédé conforme à l'invention. En résumé, dans l'arbre 26 illustré les boîtes 27 et leurs liens 28 ont été créés par analyse de la requête 10 dans la table 11 représentative du plan d'exécution. Dans l'exemple illustré dans la figure 3, la fenêtre 25 de présentation de l'arbre 26 est avantageusement fournie par l'outil DB*EXPLAIN sous l'option Plan et accompagnée du nom de la vue et de la fenêtre 24 d'édition de la requête 10 qui ont été représentés sur la figure 2C.

L'arbre 26 peut incorporer tout ou partie des informations résultant de la recherche du plan d'exécution de la requête écrit dans le langage de requête du SGBDR, telles que les informations contenues dans la table 11 de la figure 1. Par exemple, chaque boîte 27 porte en titre le nom de l'opération concernée par cette boîte. Ainsi, on retrouve dans la figure 3 les noms NESTED LOOPS, TABLE ACCESS et INDEX indiqués dans la colonne OPERATION de la table 11 de la figure 1. Si l'opération constituant le titre d'une boîte 27 a une option s'exécutant sur un objet donné, le nom de cette option peut être mentionné dans la boîte, avantageusement en sous-titre. De même, si l'opération mentionnée en titre dans une boîte 27 présente des caractéristiques, telles que le nom de l'objet et le nom du propriétaire de l'objet sur lequel s'applique l'option de l'opération, on peut indiquer dans la boîte tout ou partie de ces caractéristiques. Toutes ces options avantageuses de l'invention sont contenues dans l'arbre 26 représenté sur la figure 3. On retrouve ainsi dans les treize boîtes 27 de l'arbre 26 les noms des treize opérations mentionnées dans la table 11, complétées par l'option éventuelle qui s'exécute sur un objet donné, le nom de l'objet et le nom du propriétaire de l'objet. L'arbre 26 offre l'avantage d'être facilement compris de tout utilisateur, indépendamment de ses connaissances du langage de requête du SGBDR, et de lui fournir une vision globale du plan d'exécution de la requête. L'utilisateur qui est en présence de l'arbre 26 peut donc décider plus facilement et rapidement de son action pour optimiser la requête qui a été faite. D'autre part, grâce à l'outil DB*EXPLAIN, on a vu que l'utilisateur pouvait ne pas écrire la requête et la modifier facilement dans la fenêtre d'édition 24 de la figure 2C. Après modification, l'administrateur peut avoir très vite le nouvel arbre d'exécution pour se rendre compte de l'efficacité de sa modification. L'outil offre l'avantage supplémentaire de conserver l'arbre précédent et de permettre ainsi à l'administrateur de comparer facilement et rapidement les deux arbres.

Bien entendu, ces avantages pourraient aussi être offerts en n'utilisant pas l'outil DB*EXPLAIN, et en utilisant les moyens classiques de recherche du plan d'exécution d'une requête dans le langage de requête du SGBDR. Les résultats de cette recherche sont présentés dans une table 11 dans le SGBDR choisi à titre d'exemple, mais il est clair qu'ils peuvent se présenter sous une autre forme selon le type de SGBDR. L'analyse de ces résultats sera adaptée aisément à leur forme par l'homme du métier pour créer un arbre d'exécution de la requête.

Selon une autre caractéristique de l'invention, d'autres informations que celles fournies par l'analyse des résultats de la demande du plan d'exécution peuvent être obtenues. Par exemple, il est possible d'obtenir des informations additionnelles sur certaines caractéristiques éventuelles d'une opération. Dans l'exemple illustré, le nom de l'objet sur lequel s'exécute l'opération constituant le titre d'une boîte 27 et éventuellement le propriétaire de cet objet sont écrits dans un bouton 29 inséré dans la boîte, de façon qu'en cliquant sur le bouton 29 un utilisateur puisse obtenir des informations additionnelles sur cet objet.

Dans le cas où l'opération qui s'exécute sur l'objet cliqué est une table (TABLE ACCESS dans les boîtes 27 de l'exemple illustré) la recherche des informations additionnelles est faite par exemple grâce à une requête SQL sur la table DBA_TAB_COLUMNS du dictionnaire d'Oracle. Cette table donne la structure d'une table contenue dans la base de données du SGBDR, c'est-à-dire le nom des colonnes avec notamment leurs types et leurs tailles. Les informations additionnelles peuvent ainsi être tout ou partie des éléments descriptifs de la table mentionnée dans la boîte. On peut donc obtenir par exemple la description de la table, le nom des colonnes et le type des colonnes. De préférence l'outil DB*EXPLAIN les affiche dans une fenêtre annexe non représentée.

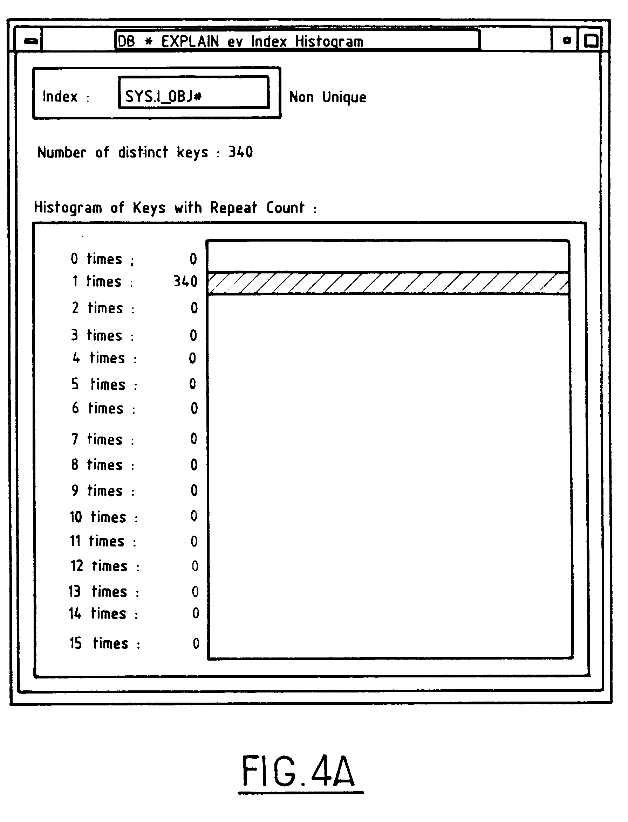

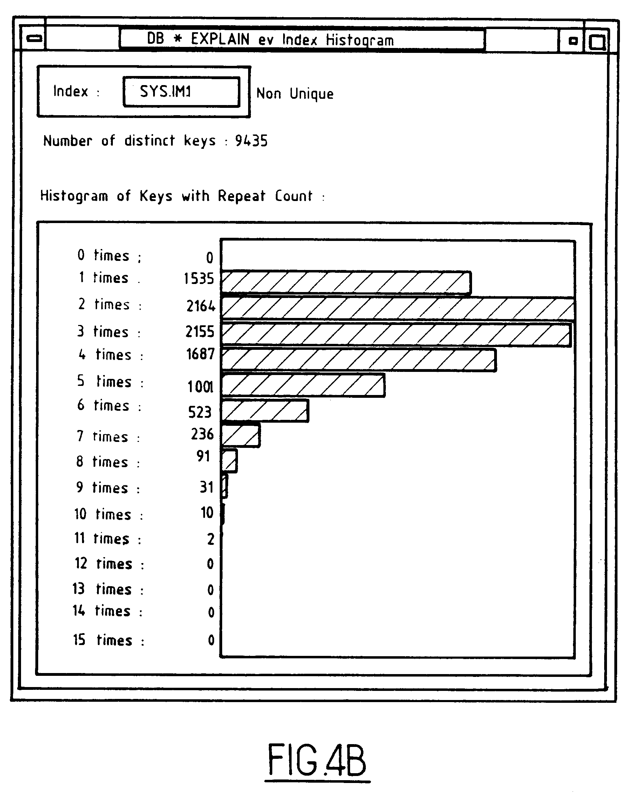

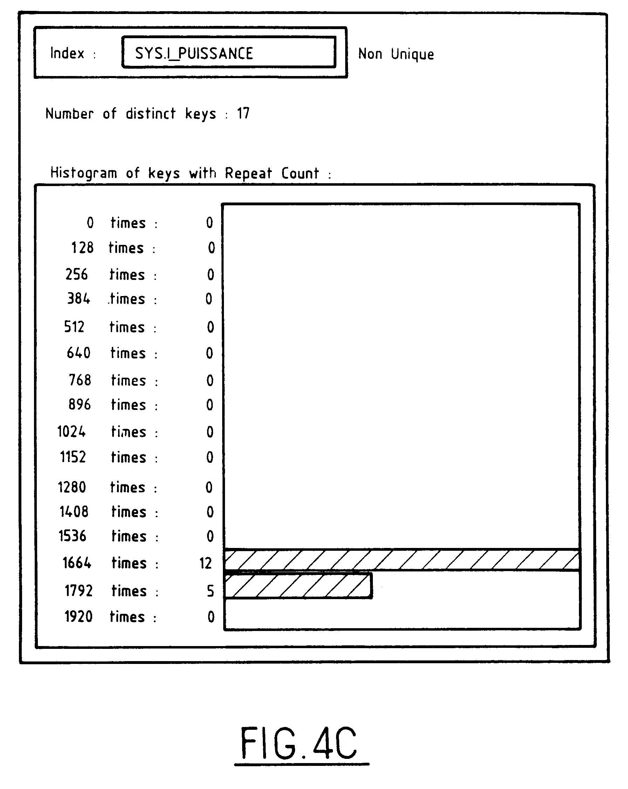

Si l'opération s'exécutant sur l'objet cliqué est un index (INDEX dans les boîtes 27), l'information additionnelle peut être un histogramme, tel que celui représenté sur la figure 4A. Les informations contenues dans cet histogramme ont été obtenues par la commande VALIDATE INDEX d'Oracle. En réponse, Oracle crée une table histogramme. A partir de la table histogramme, on forme, au moyen d'un petit programme ordinaire pour l'homme du métier, un écran représentatif de cet histogramme tel que celui illustré dans la figure 4A. Dans l'exemple illustré dans la figure 4A, l'utilisateur sait que son index compte 340 clés qui ne sont pas répétées. L'utilisateur sait immédiatement que l'index choisi est très bon. Les figures 4B et 4C illustrent respectivement deux autres exemples d'histogrammes qui pourraient être obtenus grâce à l'invention. De l'exemple de la figure 4B, l'utilisateur sait que les index utilisés sont moins sélectifs que précédemment. La figure 4C est un histogramme représentatif d'un index très peu sélectif, et donc à changer. Ces exemples mettent bien en relief les avantages offerts par le procédé conforme à l'invention.

Une autre phase du procédé d'aide à l'optimisation d'une requête consiste à faire une analyse syntaxique de la requête. L'analyse syntaxique peut être faite selon divers procédés connus de l'homme du métier. Dans l'exemple qui va maintenant être décrit, l'analyse syntaxique conforme à l'invention est d'une manière générale déterminée par l'analyse du fonctionnement du SGBDR, afin de déterminer notamment les types des noeuds du graphe syntaxique et de préférence des informations associées à ces types.

L'analyse approfondie du fonctionnement d'Oracle fait apparaître que l'exécution des jointures entre tables et des produits cartésiens se fait sans ordre. Il est possible d'accéder plusieurs fois à plusieurs tables et de faire plusieurs opérations pour un ordre SQL. Des tris peuvent être ajoutés ou supprimés. Les projections et les tests ne sont pas marqués. Le seul indice que donne le SGBDR est le nom des tables et des index accédés, ainsi que l'ordre de citation des tables dans les clauses FROM de la requête source. Cela est insuffisant pour comprendre tout un plan d'exécution pouvant comprendre plusieurs centaines de noeuds. Cette insuffisance, quand elle apparaît pour un type de SGBDR donné, est surmontée par le procédé d'analyse syntaxique conforme à l'invention. Dans ce cas, l'analyse syntaxique comprend la détermination des opérations exécutées par le SGBDR et de l'ordre dans lequel ces opérations sont exécutées. Cet ordre a l'avantage d'établir une relation rigoureuse entre la requête et le plan d'exécution. Dans le cas du présent SGBDR choisi à titre d'exemple, l'analyse approfondie de son fonctionnement a fait apparaître l'ordre suivant :
TABLE GROUP HAVING UNION ORDER
où
TABLE représente, pour une requête, à la fois l'accès aux tables de la clause FROM, le produit cartésien entre ces tables et tous les tests de la clause WHERE,
GROUP représente la clause GROUP BY et les calculs des agrégats,
HAVING représente la clause HAVING,
UNION représente les opérations UNION, MINUS et INTERSECT, et
ORDER représente la clause ORDER.

Oracle calcule les agrégats d'une requête et effectue le GROUP BY lorsque toutes les tables de la clause FROM ont subi un produit cartésien et les restrictions de la clause WHERE. Il exécute la clause HAVING après avoir fait les opérations de groupage en même temps que les projections. Il effectue ensuite les opérations UNION, puis ORDER ordonne la fourniture du résultat final. Selon une autre contrainte, les opérations UNION sont exécutées dans l'ordre de citation dans la requête.

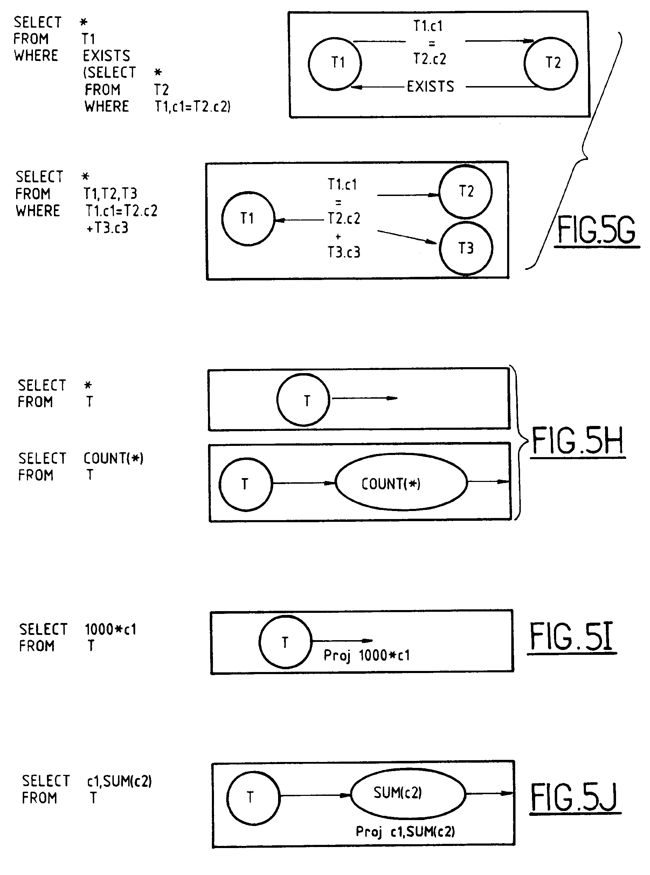

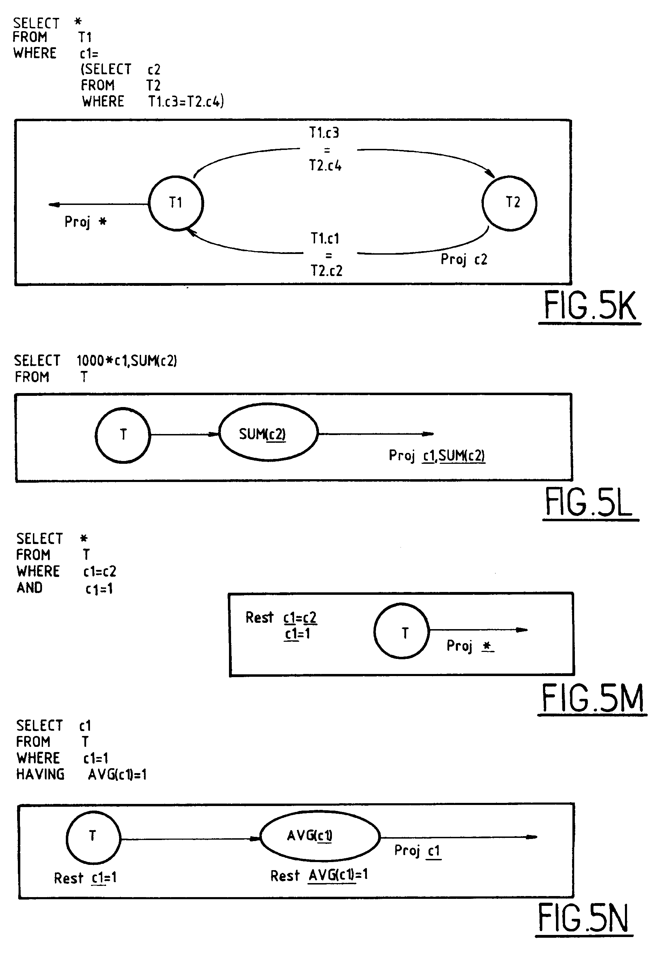

Les figures 5A-5N illustrent à titre d'exemple des conditions pour la détermination des types de noeuds du graphe syntaxique à partir de la relation d'ordre résultant de l'analyse approfondie du fonctionnement du SGBDR choisi. Elles donnent aussi quelques exemples d'informations que l'on peut obtenir de l'analyse approfondie du fonctionnement du SGBDR.

Selon une définition classique, un noeud représente une table réelle ou virtuelle. Selon l'exemple choisi, on peut créer un noeud :
- par table citée (figure 5A) ;
- pour les opérations de groupage. Ces opérations sont placées dans les noeuds et sont les agrégats de GROUP BY, UNIQUE (figure 5B) ;
- pour l'opération ORDER BY (figure 5C) ;
- par les clauses FROM pouvant posséder plusieurs tables. Dans ce cas, le flux réel sortant est le résultat du produit cartésien de ces tables. Le produit cartésien n'est pas une opération explicite dans le graphe syntaxique et y est représenté par l'arrivée de plusieurs flèches de flux sur un même noeud. Cependant, s'il n'y a pas d'opérations de groupage, on doit créer un noeud vide. (figure 5D) ;
- par une opération assembliste UNION, MINUS et INTERSECT. Le type d'opération est indiqué (figure 5E).

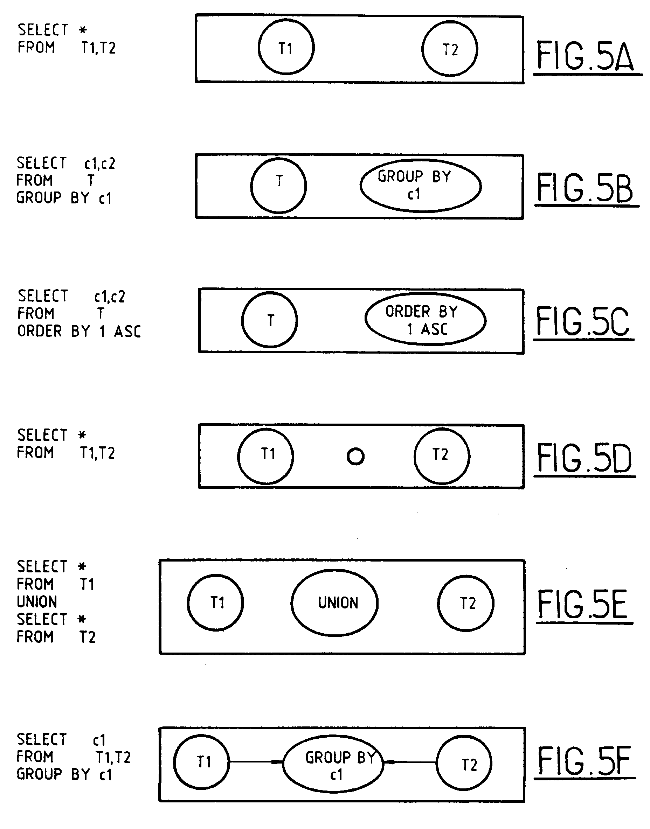

En ce qui concerne les arcs orientés :
- un arc orienté non étiqueté représente le sens du flux réel des tuples (figure 5F) ;
- un arc orienté étiqueté par un test représente le sens du flux logique des tuples. En d'autres termes, pour chaque tuple de la table de départ, on sélectionne l'ensemble des tuples de la table d'arrivée satisfaisant à la condition. La condition n'influe donc que sur la table d'arrivée du flux (figure 5G).

Le résultat de la requête est représenté par une flèche de flux sans noeud d'arrivée, sortant du noeud qui a exécuté la dernière opération de la requête (figure 5H).

En ce qui concerne les projections :
- les projections de la clause SELECT sont écrites près du noeud d'où sortira le flux réel. S'il n'y a qu'une table dans la clause FROM et pas d'opération de groupage, les projections sont marquées sous le noeud de la table (figure 5I) ;
- les projections sont écrites sous un noeud vide résultant d'un produit cartésien ou sous un noeud créé par des opérations de groupage (figure 5J) ;
- les projections sont écrites près de la flèche (de flux ou de condition) résultant de la projection (figure 5K).

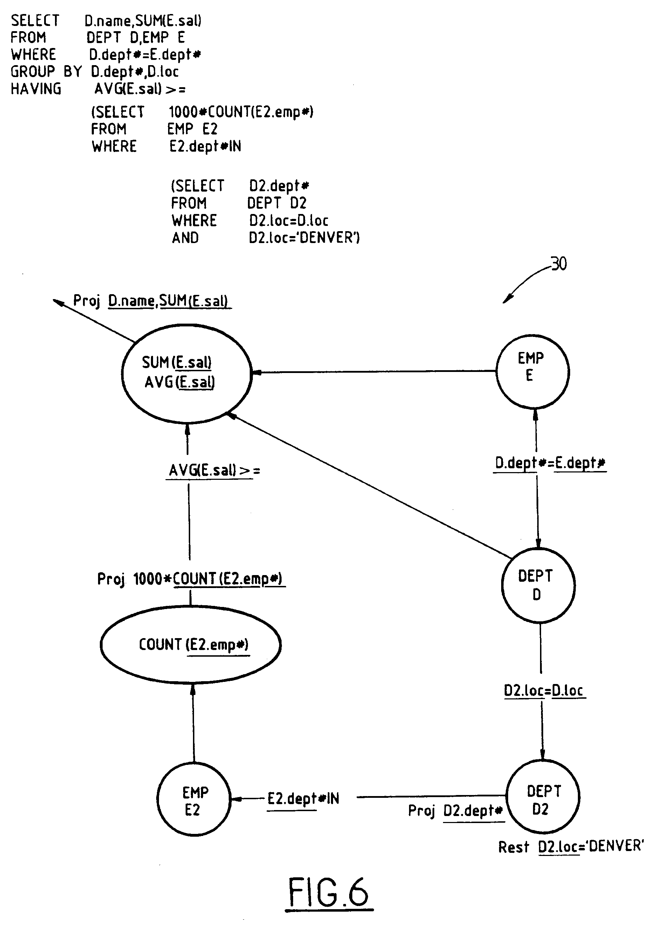

Dans les opérations des noeuds, les projections et les labels de conditions, les opérandes provenant du flux entrant sont soulignés (figure 5L). Lorsqu'une condition de la clause WHERE (ou HAVING) ne comprend que des éléments de cette table et des constantes, les conditions sont marquées sous le noeud (figure 5M). Enfin, les tests d'une clause WHERE portent sur les noeuds contenant le nom des tables et les tests d'une clause HAVING portent sur le noeud contenant les opérations de groupage (figure 5N). La figure 6 illustre un exemple de graphe 30 représentatif de l'analyse syntaxique faite conformément aux critères qui viennent d'être définis. Ce graphe se présente sous forme d'un réseau, nom qui sera donné par la suite à ce graphe.

Maintenant que l'arbre 26 du plan d'exécution (figure 3) et le réseau 30 de l'analyse syntaxique de la requête (figure 6) sont obtenus, l'étape finale du procédé conforme à l'invention consiste à les comparer pour compléter l'arbre 26 avec des éléments seulement contenus dans le réseau. La comparaison de l'arbre avec le réseau a été faite dans l'exemple illustré en trois phases : associer les noeuds de l'arbre avec les noeuds du réseau, placer les projections et placer les tests.

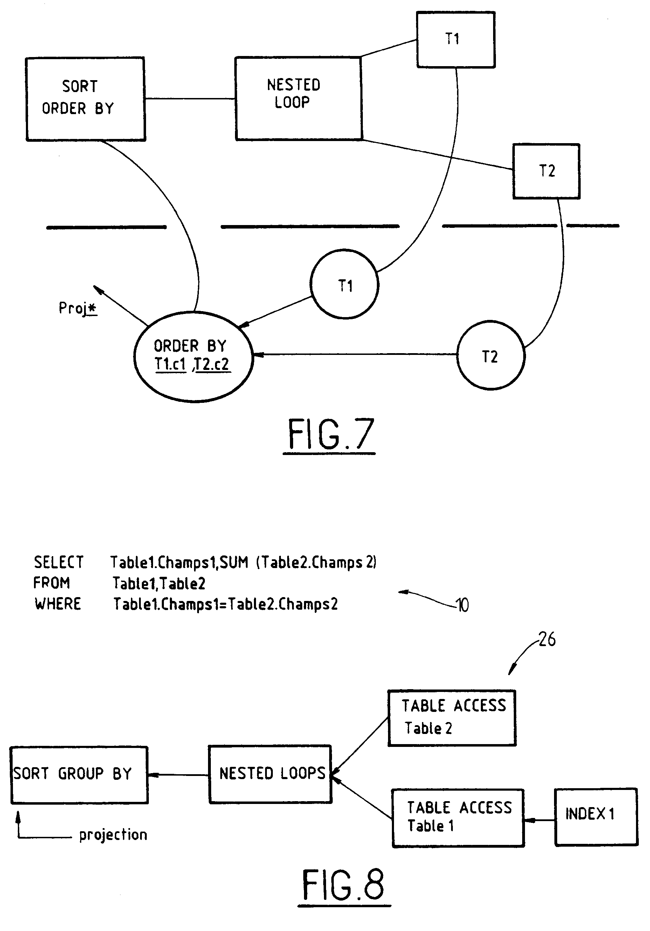

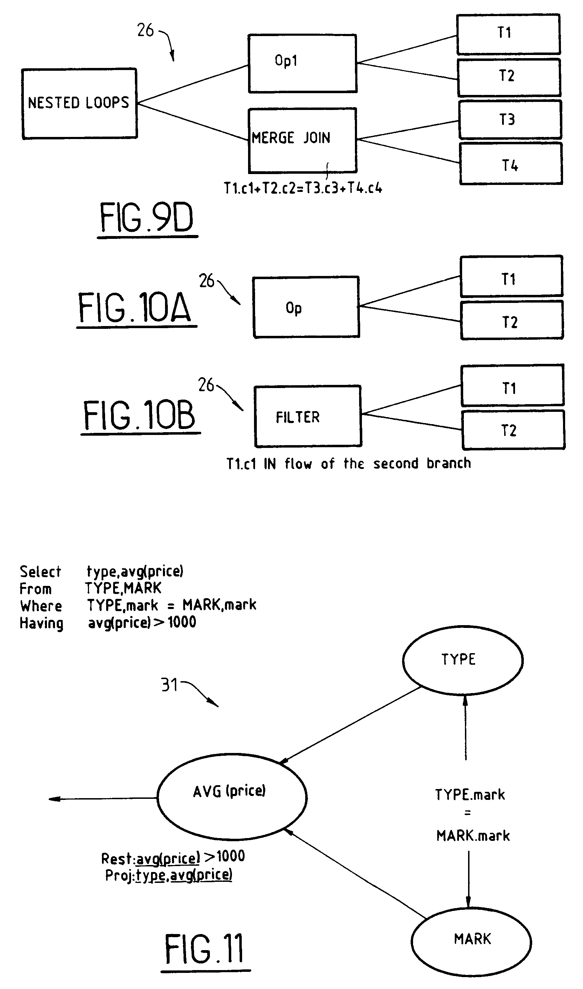

Par exemple, pour associer les noeuds du réseau avec ceux du plan d'exécution, les opérations de l'outil DB*EXPLAIN, qui sont celles du SGBDR, ont été classées dans deux groupes selon qu'elles sont prévisibles ou imprévisibles. Les opérations prévisibles sont celles qui se suivent dans le même ordre dans l'arbre et dans le réseau. On a vu que le réseau n'est fait que des opérations de ce premier groupe (noeud TABLE, GROUP, UNION et ORDER). Dans ce groupe, on trouve aussi les opérations INDEX, TABLE ACCESS, UNION, MINUS, INTERSECT, SORT GROUP BY et SORT ORDER. La figure 7 illustre un exemple d'association des noeuds prévisibles d'un réseau et d'un arbre. Les opérations constituant le second groupe sont imprévisibles quand l'ordre dans lequel elles apparaissent dans la requête n'est pas préservé parce que plusieurs algorithmes sont possibles à chaque fois. Ce sont notamment les opérations de jointure NESTED LOOPS, FILTER et MERGE JOIN. Les jointures dans le réseau apparaissent dans la figure 11 comme des liens entre les noeuds associés. De manière générale, on constitue avec les noeuds imprévisibles les liens entre les noeuds prévisibles associés.

Le placement des projections consiste à placer les projections sur les noeuds adéquats de l'arbre. Une clause SELECT n'est exécutable que si toutes les tables de la clause FROM sont accédées, tous les tests de la clause WHERE sont exécutés, les agrégats sont calculés et les clauses GROUP BY et HAVING sont exécutées. Dans le réseau, les projections se font sur le noeud GROUP, sauf s'il n'y a ni produit cartésien, ni agrégat, ni clause GROUP BY, ou si la clause ORDER BY s'ajoute à la clause GROUP BY. Ainsi, dans l'exemple de l'arbre 26 illustré dans la figure 8 et représentatif du plan d'exécution de la requête illustrée en marge de cette figure, la projection se fait à la fin de l'opération SORT GROUP BY.

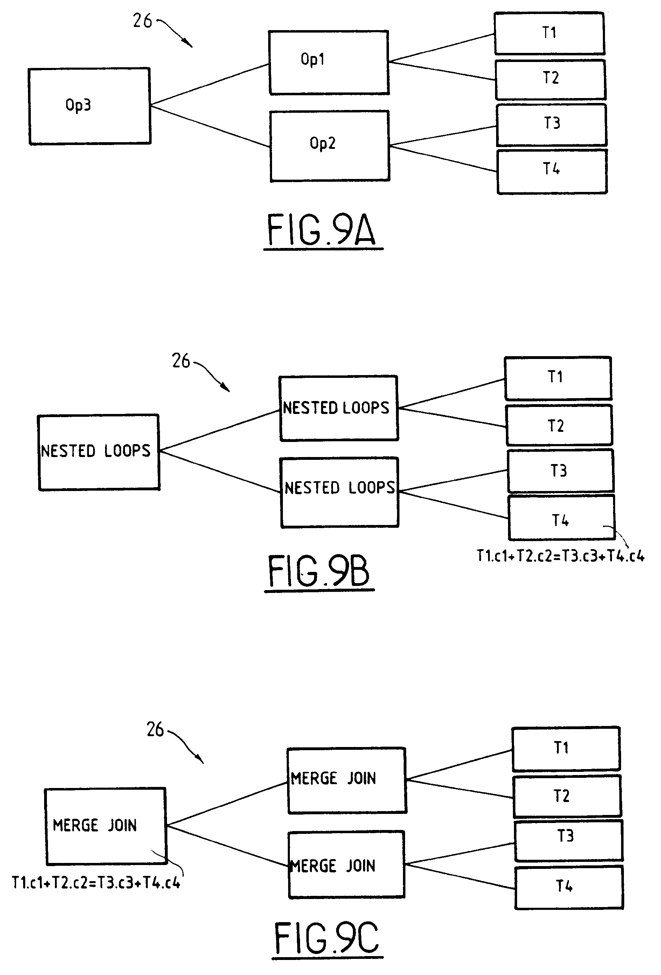

Le placement des tests consiste à placer les tests sur les noeuds adéquats de l'arbre. Plusieurs exemples vont illustrer cette phase de l'association de l'arbre avec le réseau. Selon un premier exemple, on a supposé que l'arbre 26 avait la forme illustrée dans la figure 9A et qu'on avait la jointure entre T1, T2, T3 et T4 telle que T1.c1 + T2.c2 = T3.c3 + T4.c4. Dans cet exemple, le reste de la requête n'a pas d'importance. Le lieu du test dépend de l'algorithme utilisé. Dans le premier cas illustré dans la figure 9B, Op1, Op2 et Op3 représentent une opération NESTED LOOPS, qui a déjà été définie comme une opération paramétrée. Les tuples ramenés par le premier fils sont passés au second fils. Le test se fait donc dans la feuille T4, comme illustré. Dans le second cas illustré dans la figure 9C, Op1, Op2 et Op3 représentent une opération MERGE JOIN, qui est une opération ensembliste qui n'implique pas de passage de paramètres. Le test se fait dans le noeud MERGE JOIN Op3 à travers lequel passent les flux des quatre tables, comme illustré. On peut remarquer que l'algorithme de Op1 n'influe pas sur le lieu du test. Dans le troisième et dernier cas représenté sur la figure 9D, Op2 est une opération MERGE JOIN et Op3 est une opération NESTED LOOPS. Les tuples de l'opération Op1 passent en paramètre dans la branche inférieure de l'opération Op3. Par conséquent, c'est l'opération Op2 MERGE JOIN qui fait le test.

Le second exemple porte sur les clauses SELECT imbriquées. On suppose l'imbrication ...T1.c1 IN (SELECT T2.c2 ...) telle que représentée dans l'arbre 26 de la figure 10A. Quand le test est une imbrication, l'algorithme est la clause FILTER. Dans ce cas, le test IN nécessite au préalable l'exécution de toutes les clauses SELECT imbriquées. Le test se fait donc dans FILTER. Il se conclut par le fait que T1.c1 doit avoir une valeur égale à une valeur venant de la seconde branche et se traduit par "IN flux de la seconde branche", comme illustré dans la figure 10B. Si l'algorithme est NESTED LOOPS ou MERGE JOIN, le SGBDR transforme l'imbrication en jointure normale en présence d'un test IN ou EXISTS possédant une jointure entre une clause SELECT imbriquée et une clause SELECT non imbriquée. Par exemple, si on a 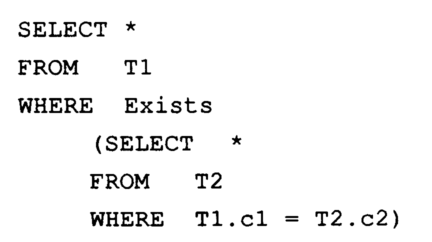 alors le SBGDR transforme le test IN ou EXIST en jointure en modifiant la projection :
- SELECT: unique TI.*
- FROM: T1, T2
- WHERE: T1.c1 = T2.c2.

Des exemples de réalisation du procédé conforme à l'invention vont maintenant être illustrés. Ces exemples sont fondés sur un fichier écrit en langage C pour fonctionner dans une configuration Unix. Le fichier donné à titre d'exemple est le fichier struct.h joint en annexe à la fin de la présente description et faisant partie de la description. Ce fichier donne les définitions de toutes les structures propres au réseau et se présente de la manière suivante.

Conformément au langage C, tous les objets du fichier sont caractérisés par la même classe spécifiée par le mot-clé **typedef** propre à la construction d'un nouveau type. Le type ainsi défini peut alors être utilisé comme un type de base. Le fichier se partage en deux parties relatives aux deux types composés que sont les énumérations et les structures du langage C. Une énumération définit un type par extension et se déclare à l'aide du mot-clé **enum**. Les structures se déclarent à l'aide du mot-clé **struct**. On rappellera aussi que le type entier se déclare avec le mot-clé **int**, le type caractère par **char** et le type flottant par **float**. Le qualificateur **const** spécifie que l'objet auquel il s'applique est un objet constant, non modifiable par l'exécution du programme. Les commentaires sont délimités par les séquences /* et */.

La première énumération faite dans le fichier struct.h a pour nom TYPE_COL et définit les différents types de colonnes pouvant être utilisés dans une table de la base de données et par la structure s_Field. L'énumération suivante, désignée par TYPE_CONST, définit les types de constantes utilisés dans la structure s_Const. L'énumération TYPE_EXPLAIN définit les types d'opération du SGBDR qui ont été repris par l'outil DB*EXPLAIN et qui sont utilisés dans la structure s_Node. L'énumération TYPE_EXPL_OPT définit les types des options relatives aux opérations énumérées dans l'énumération précédente. Ces options sont utilisées dans la structure s_Node. On a défini précédemment par exemple certaines options de l'opération de tri SORT. L'énumération TYPE_NODE définit les types de noeuds du réseau qui sont utilisés dans la structure s_Node. L'énumération TYPE_OPER définit les types d'opération du langage SQL utilisés dans les expressions arithmétiques et dans la structure s_Oper. Les autres énumérations se rapportent successivement aux modes de la clause ORDER (TYPE_ORDER) qui sont utilisés dans la structure s_Order_Col, aux opérations sur requêtes (TYPE_QUERYOP), aux modes relatifs à la commande SELECT (TYPE_SELECT) et utilisés par les structures s_Node, s_Oper et s_SELECT, aux types de chacune des structures (TYPE_STRUCT), aux types de test dans un prédicat (TYPE_TEST) qui sont utilisés dans la structure s_Test, aux options (TYPE_TESTOPT) des tests du langage SQL qui sont utilisées dans les structures s_Test et s_Set, et aux listes de tests dans une structure de noeuds (TEST_LIST). Ces énumérations sont complétées par les définitions individuelles indiquées dans les lignes suivantes.

La seconde partie du fichier struct.h décrit les différentes structures qui sont utilisées. La description qui suit fournit des commentaires supplémentaires à ceux du fichier. Le premier champ de chacune des structures est défini dans l'énumération TYPE_STRUCT.

La structure s_Node est représentative d'un noeud de l'arbre à compléter avec les éléments du réseau. Celle qui est décrite dans le fichier est une version améliorée de la structure citée plus haut qui suffisait pour construire l'arbre 26. Le type du noeud peut être une table, un groupe, un ordre, une opération EXPLAIN ou QUERY. La liste input_nodes est la liste des noeuds fils dont le flux de données entre dans un noeud de l'arbre. Le champ suivant définit comme noeud sortant celui où va le flux de sortie du noeud. Les listes input_tests et output_tests concernent respectivement les tests de jointure entrants, qui sont ceux influant sur le résultat, et les tests de jointure sortants, qui sont ceux utilisant les valeurs dudit flux de sortie sans influer sur le résultat. Les tests internes de la liste suivante ne concernent que ledit noeud. L'information info indique la structure d'un noeud. Pour un noeud table, on pointe sur une structure s_Table ; pour un noeud de groupage, on pointe sur une structure s_Group ; pour un noeud d'ordre, on pointe sur une structure s_Order ; et un noeud d'union correspond à une opération de TYPE_QUERYOP. La liste fields est la liste de tous les pointeurs sur des champs ou des opérations de projection. Elle représente la structure du flux de sortie du noeud après la projection. Les pointeurs de la liste ne repèrent pas des structures propres à cette liste. Ils repèrent soit des structures s_Field de la liste fields de la structure s_Table s'il n'y a pas encore eu de projection, soit des structures de la liste proj de la présente structure. Selon le dernier champ nested, au cas où un noeud représentant une semi-jointure entre un SELECT normal et un SELECT imbriqué, il faut savoir laquelle des deux branches filles du noeud représente le SELECT imbriqué.

La structure s_Oper décrit bien une opération arithmétique ou un appel de fonction.

La structure s_Column est utilisée pour l'analyse syntaxique d'une colonne. Une colonne est ce qui sépare les virgules dans les clauses SELECT (colonnes de projection), GROUP BY (colonnes de groupage), ORDER BY (colonne de tri) et se trouve à droite et à gauche d'un test non imbriqué. Par exemple, avg(table.field) + table.price * 1000 est une seule colonne. Une colonne est la racine d'un arbre de structures s_Oper, s_Field, s_Const et s_Set.

Dans la structure s_Column, oper est une opération de la racine. Il peut s'agir aussi d'un champ ou d'une constante. La liste funct est celle des agrégats contenus dans la colonne. Elle n'a pas ses structures propres. C'est une liste de pointeurs sur des structures s_Oper contenues dans l'arbre dont la racine est s_Column. Enfin, la liste fields est celle des champs contenus dans la colonne. Elle n'a pas aussi de structures propres.

Les structures s_Const et s_Field sont bien décrites.

Dans la structure s_From ramenée par l'analyse syntaxique de la clause FROM, la liste tables est celle des noeuds de tables résultant de l'analyse syntaxique. Il y a un noeud par table citée.

Dans la structure s_Group la liste funct est celle des agrégats à calculer. Cette liste n'a pas ses propres structures. Il s'agit d'une liste de pointeurs sur des structures s_Oper présentes dans la liste fields de la structures s_Group (les agrégats de la clause GROUP BY), la liste proj de s_Node (les agrégats de la clause SELECT) et les listes de tests de s_Node si c'est un noeud de groupage (les agrégats de la clause HAVING).

Les structures s_Having, s_Order et s_Order_Col sont bien décrites.

La structure s_Select est ramenée par l'analyse syntaxique de la clause SELECT. Dans la liste proj des opérations de projection, chaque colonne dans la projection correspond à un élément dans la liste. La liste funct des agrégats présents dans la projection n'a pas ses propres structures. Elles pointent sur les structures s_Oper présentes dans la liste précédente. De même, la liste fields des champs de la projection ne pointe pas sur ses propres structures.

La structure s_Set est bien définie dans le fichier. Elle permet de mémoriser une liste de valeurs.

Dans la structure s_Table, l'objet EXPLAIN donne le numéro du noeud EXPLAIN de l'arbre d'exécution.

Dans la structure s_Test représentative d'un test, la liste fields des champs de la table ou de l'index n'a pas ses propres structures. Ce sont celles présentes dans l'arbre des opérandes constituant le test.

La structure s_Where est ramenée par l'analyse syntaxique de la clause WHERE. La liste nodes est celle des noeuds totaux créés par l'analyse syntaxique des clauses SELECT imbriquées. La liste tests regroupe les tests de la clause HAVING et les tests créés par l'analyse syntaxique des clauses SELECT imbriquées. Enfin, étant donné que pour l'analyse syntaxique une structure s_Where peut être utilisée en même temps qu'une analyse syntaxique de la clause HAVING, la liste funct contient les agrégats présents dans les tests. Cette liste ne pointe pas sur ses propres structures.

La dernière structure s_Connect est ramenée par l'analyse syntaxique du privilège CONNECT de SQL.

La première illustration de l'utilisation du fichier struct.h se réfère à l'exemple de requête citée dans l'introduction :
- SELECT: Type
- FROM: Type_Car
- WHERE: Mark='XXX'

Dans ce cas, la structure s_Select serait utilisée pour la construction de l'arbre, comme cela a été décrit précédemment. Pour l'analyse syntaxique de la requête, on trouverait la marque XXX dans s_Const, où on aurait value = 'XXX' et type = CONST_STRING de l'énumération TYPE_CONST. La structure s_Set pourrait être impliquée si Mark serait à choisir entre XXX, YYY et ZZZ. D'autre part, dans la requête, le terme Mark dans WHERE Mark correspond à la structure s_Field. Dans s_Field, table_name = Type_Car, name = Mark et type serait le type de la colonne définie par COL_STRING dans l'énumération TYPE_COL. Dans la requête, WHERE Mark = 'XXX' se réfère à s_Test et à s_Where. Dans s_Test, le type de test défini dans TYPE_TEST serait TEST_EQ signifiant que le test consiste en une égalité. Autrement, par exemple en cas de non égalité, l'option NOT serait choisie. Le premier opérande serait Mark correspondant à s_Field et le second opérande serait la constante XXX déterminée dans s_Const, comme on l'a vu précédemment. La liste des champs du test n'inclurait que Mark, mais pourrait aussi y inclure par exemple Price. Dans s_Where, le test sera choisi dans la liste des tests possibles qui sont contenus dans la clause WHERE. De même, dans la liste nodes on choisira la table contenant Mark. Les structures relatives aux clauses CONNECT, FROM et HAVING ne sont pas utilisées dans l'exemple considéré. Cependant, l'exemple précédent et le fichier struct.h suffisent à l'homme du métier pour les utiliser correctement, sans ambiguïté et sans problème. Finalement, on pointe sur s_Global pour obtenir le graphe final. Term désigne le noeud terminal du graphe final, c'est-à-dire la boîte de tête du graphe d'où partent tous les autres noeuds que l'on trouve dans la liste nodes résultant des tests contenus dans la requête, à savoir le test de la clause WHERE dans la requête ayant servi d'exemple.

La représentation du réseau avec les structures de données qui viennent d'être décrites va maintenant se faire à l'aide de l'exemple illustratif de la requête suivante, reproduite aussi dans la figure 11 :
- SELECT: type, avg (price)
- FROM: TYPE, MARK
- WHERE: TYPE.mark = MARK.mark
- HAVING: avg (price) > 1000

D'après l'enseignement de ce qui précède, le réseau résultant 31 se présente sous la forme illustrée dans la figure 11. Pour clarifier la représentation du réseau avec les structures de données, les différents champs des structures sont illustrés dans des figures différentes 12A-12H. Par convention, les flèches dans ces figures représentent des pointeurs. Un pointeur est le champ qui se trouve au départ de la flèche. Lorsque le pointeur est une liste, chaque objet de la liste est relié au suivant pair une flèche. L'ordre des flèches représente l'ordre de la liste.

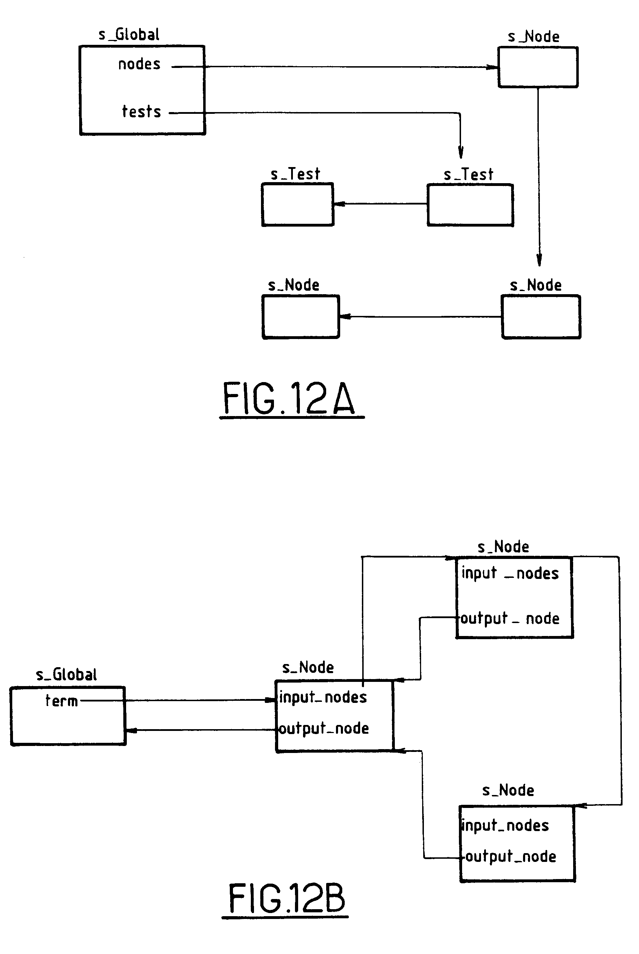

La figure 12A illustre les champs repérant tous les noeuds et tous les tests du réseau. Dans la structure s_Global, la liste nodes pointe successivement sur toutes les trois structures s_Node représentatives des trois noeuds du réseau tandis que la liste tests pointe successivement sur les deux structures s_Test représentatives des deux tests impliqués dans le réseau, à savoir le test de supériorité relatif au premier noeud et le test d'égalité entre les deux autres noeuds.

La figure 12B illustre les champs repérant le sens des flux. Dans la structure s_Global, le noeud term représentatif du noeud terminal d'où provient le résultat pointe sur la structure s_Node représentative du noeud terminal. Dans s_Node, la liste des noeuds d'entrée input_nodes pointe sur les deux autres structures s_Node. Les noeuds de sortie output_node de ces deux structures pointent sur la structure s_Node du noeud terminal, dans laquelle le noeud de sortie pointe sur s_Global.

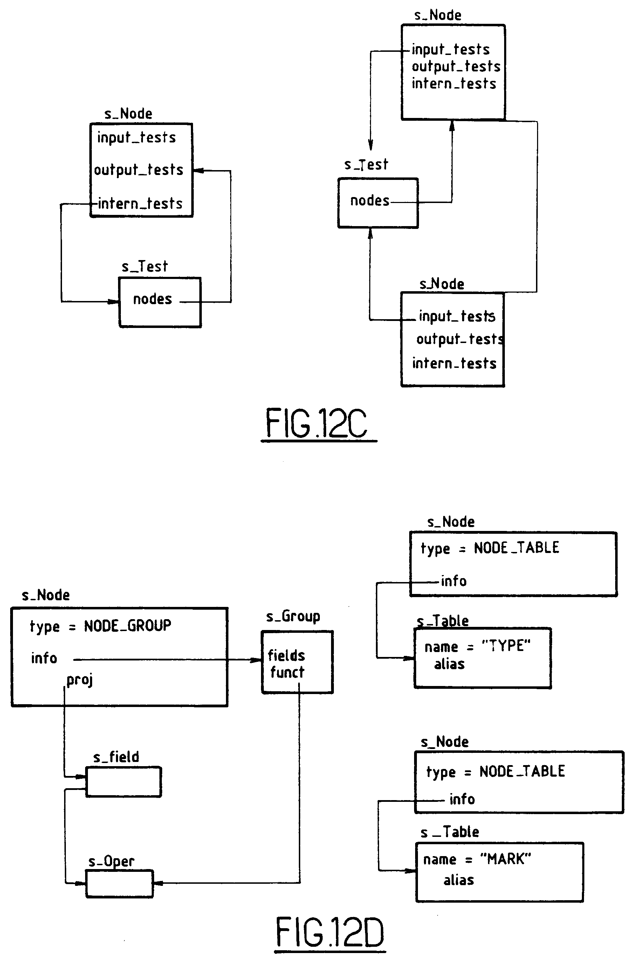

La figure 12C illustre les champs décrivant les liens entre tests et noeuds. Le test de supériorité ne concerne que le noeud terminal et constitue donc un test interne. Par conséquent, la liste des tests internes intern_tests de la structure s_Node du noeud terminal pointe sur la structure s_Test, dans laquelle la liste nodes des noeuds possédant un champ dans le test pointe sur la structure s_Node. Le test d'égalité se rapporte aux deux autres noeuds. Par conséquent, les listes input_tests des structures s_Node de ces deux noeuds pointent sur la structure s_Test, dans laquelle la liste nodes pointe sur les deux structures s_Node.

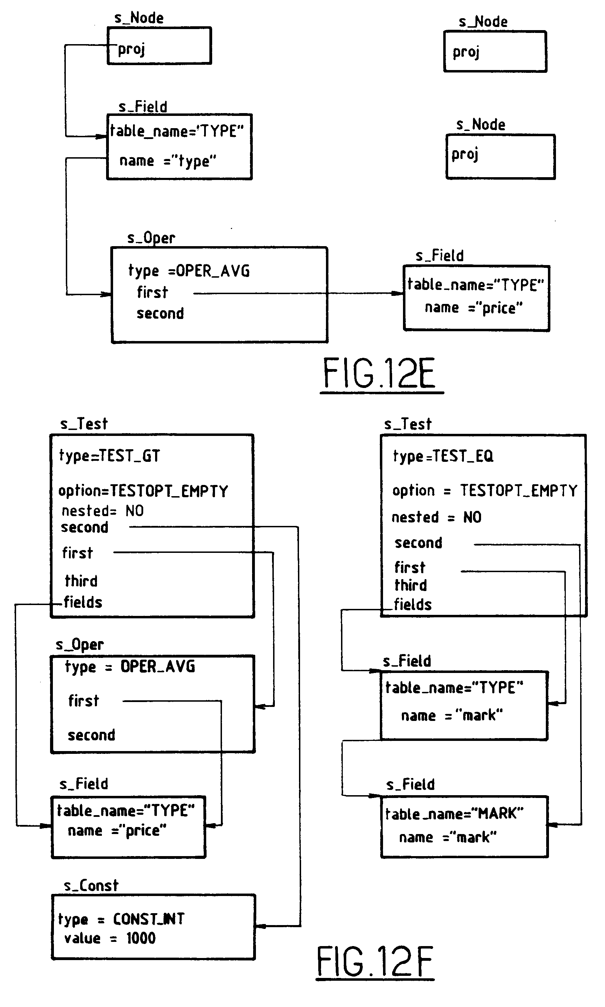

La figure 12D se rapporte aux types des noeuds. Le noeud terminal est un noeud de groupage et fait intervenir une projection. Le type du noeud dans s_Node est donc NODE_GROUP représentatif d'une clause GROUP BY, et le champ info indiquant la structure du noeud pointe sur la structure de groupage s_Group dans laquelle la liste funct des agrégats à calculer pointe sur la structure de calcul s_Oper. D'autre part, la liste des projections proj de la structure s_Node pointe sur la structure de champ s_Field qui pointe sur s_Oper de la façon qui est détaillée en référence à la figure 12E. Les deux autres noeuds se rapportent à des tables et ont donc le type NODE_TABLE et leur champ info, qui indique la structure du noeud, pointe évidemment sur la table correspondante TYPE et MARK.

La figure 12E se rapporte aux projections. L'exemple illustré dans la figure 11 fait intervenir deux projections relatives au noeud terminal. Dans la structure s_Node correspondante, la liste des projections proj pointe d'abord sur la structure de champ s_Field dans laquelle le nom de la table table_name = "TYPE" et le nom de l'objet est name = type. Elle pointe ensuite sur la structure de calcul s_Oper dont le type est AVG (type = OPER_AVG) et dont le premier opérande first pointe sur la structure s_Field dont le nom de table table_name = "TYPE" et le nom de l'objet name = "price".

Enfin, la figure 12F se rapporte aux tests. L'exemple illustré fait intervenir deux types de tests, le test de supériorité (>) et le test d'égalité (=). Pour le test de supériorité, dans la structure de test correspondante s_Test on a type = TEST_GT, sans option (option = TESTOPT_EMPTY) et sans imbrication (nested = NO). De façon similaire à celle représentée sur la figure 12E, le premier opérande pointe sur la structure s_Oper dont le type d'opération est AVG et dont le premier opérande pointe sur la structure s_Field dont le nom de la table table_name = "TYPE" et le nom de l'objet name = "price", cette structure ayant été désignée par la liste fields de la structure de test correspondante s_Test. Le second opérande est la constante 1000 fournie par la structure s_Const dans laquelle le type est un nombre entier (type = CONST_INT) et la valeur est 1000 (value = 1000). Pour le test d'égalité, on se réfère à la structure de test s_Test de type = TEST_EQ, sans option et sans imbrication. La liste des champs pointe sur la structure s_Field représentative de la table table_name = "TYPE" et de l'objet name = "mark", puis sur la structure s_Field représentative de la table table_name = "MARK" et de l'objet "mark". Ces deux structures constituent respectivement le premier opérande first et le second opérande second du test à effectuer.

Grâce au réseau 31 de la figure 11, on sait que dans le noeud terminal il existe les projections sur TYPE et AVG (price) et la restriction rest AVG (price) > 1000 et que les deux autres noeuds sont impliqués dans le test d'égalité TYPE.mark = MARK.mark. Ces éléments de la requête ne pouvaient pas apparaître dans le plan d'exécution de la requête et peuvent compléter avantageusement en tout ou partie l'arbre d'exécution 26.

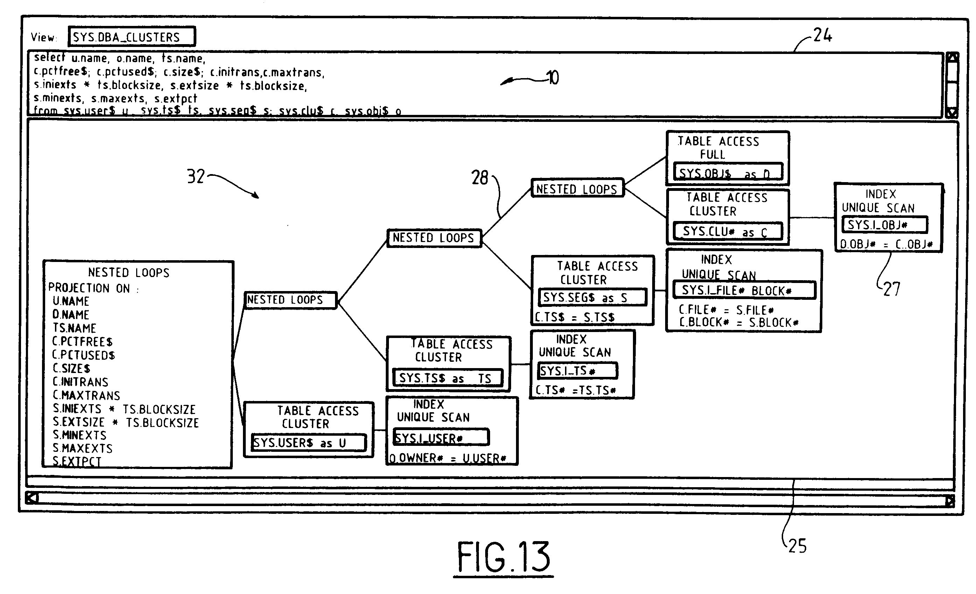

La figure 13 illustre l'arbre complet 32 d'exécution de la requête 10 représentée sur la figure 2C, résultant de la mise en oeuvre du procédé conforme à l'invention. L'arbre complet va être comparé avec l'arbre 26 représenté sur la figure 3, simplement obtenu de l'analyse du plan d'exécution de la table illustrée dans la figure 1. Dans l'arbre complet 32, les boîtes 27 contiennent les éléments descriptifs de toutes les opérations correspondantes. Ainsi, en commençant par la dernière boîte qui apparaît à droite de l'écran représenté sur la figure 13, on sait que l'opération INDEX ayant pour option UNIQUE SCAN et pour objet SYS.I_OBJ# (comme indiqué dans la figure 3) correspond à la seconde condition de la clause WHERE dans la requête 10. Cette boîte est rattachée à celle portant sur l'opération TABLE ACCESS ayant pour option CLUSTER et pour objet SYS.CLU# (comme indiqué dans la figure 3) qui a reçu dans la requête 10 le synonyme (alias) C. De même, on sait que, dans la boîte supérieure rattachée à la même opération NESTED LOOPS, l'objet SYS.OBJ# a comme synonyme O. En continuant, on sait en plus de l'arbre 26 :
- en ce qui concerne la troisième et avant dernière opération NESTED LOOPS, que l'objet dans TABLE ACCESS a pour synonyme S et est impliqué dans le quatrième test sous la clause WHERE de la requête et que la boîte fille portant sur INDEX est concernée par les deux derniers tests de la clause WHERE de la requête ;
- en ce qui concerne la seconde opération NESTED LOOPS, que l'objet SYS.TS# a pour synonyme TS et que l'opération INDEX est impliquée dans le troisième test mentionné sous la clause WHERE de la requête ;
- et enfin au sujet de la première opération NESTED LOOPS qui apparaît dans le coin inférieur gauche, que toutes les projections portant sur cette opération sont maintenant connues, que l'objet SYS.USERS# dans la boîte a pour synonyme U et que l'index est soumis au premier test de la condition WHERE de la requête.

Cet exemple illustre bien que l'arbre complet 32 peut faire une description complète d'une requête quelconque. Bien entendu, il est possible de limiter l'analyse à certains éléments pour faire une description plus ou moins complète. D'autres variantes sont évidemment possibles pour l'homme du métier en fonction du type de SGBDR et de son environnement. De manière générale, les étapes de formation des deux graphes représentatifs respectivement de l'arbre et du réseau peuvent être faits dans un ordre quelconque, et la comparaison pourrait être faite différemment de celle décrite, qui consiste à associer les noeuds de l'arbre avec les noeuds du réseau et à placer les projections et les tests. De même, les critères d'analyse syntaxique et de comparaison peuvent varier beaucoup. Cependant, les critères décrits optimisent le procédé conforme à l'invention et constitue le mode de réalisation préféré pour le SGBDR choisi comme exemple illustratif.

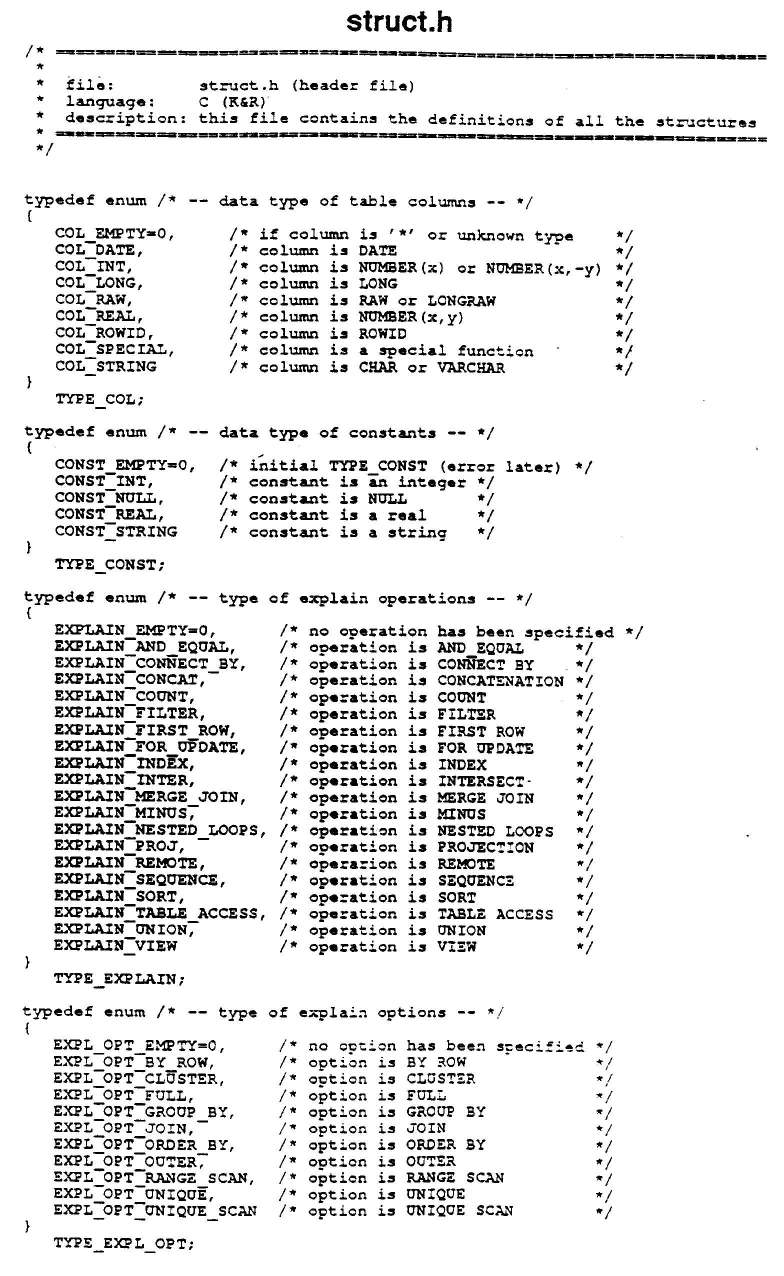

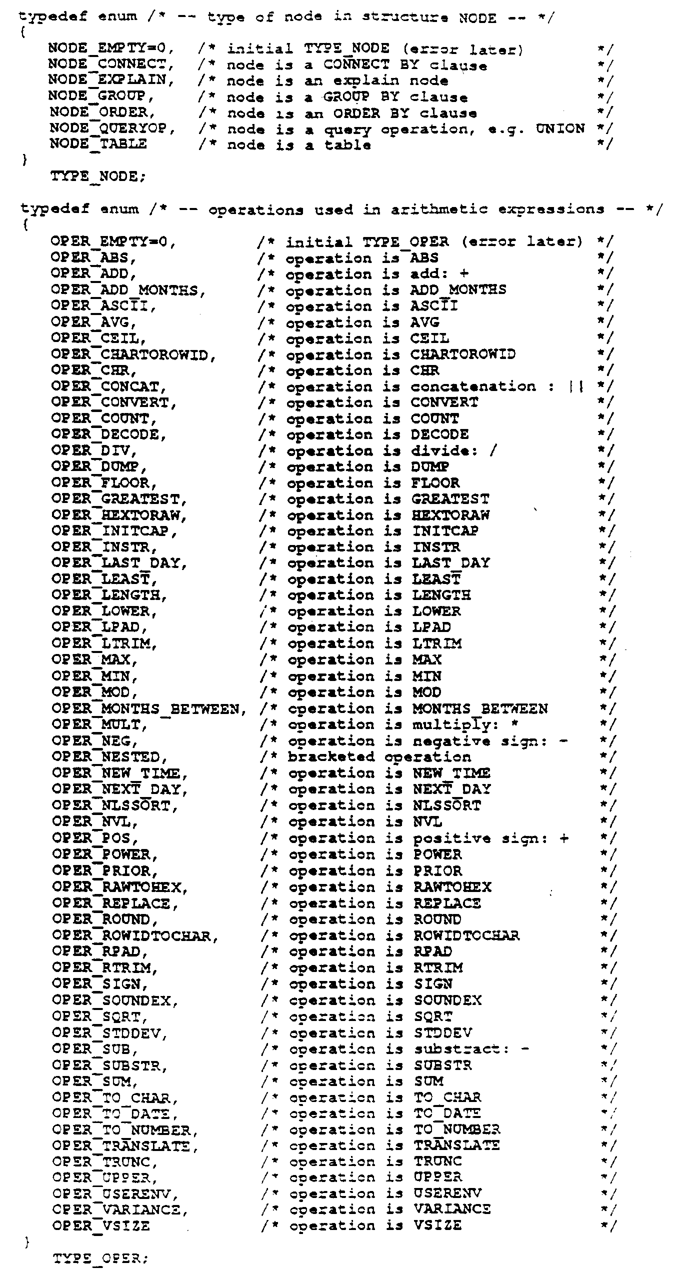

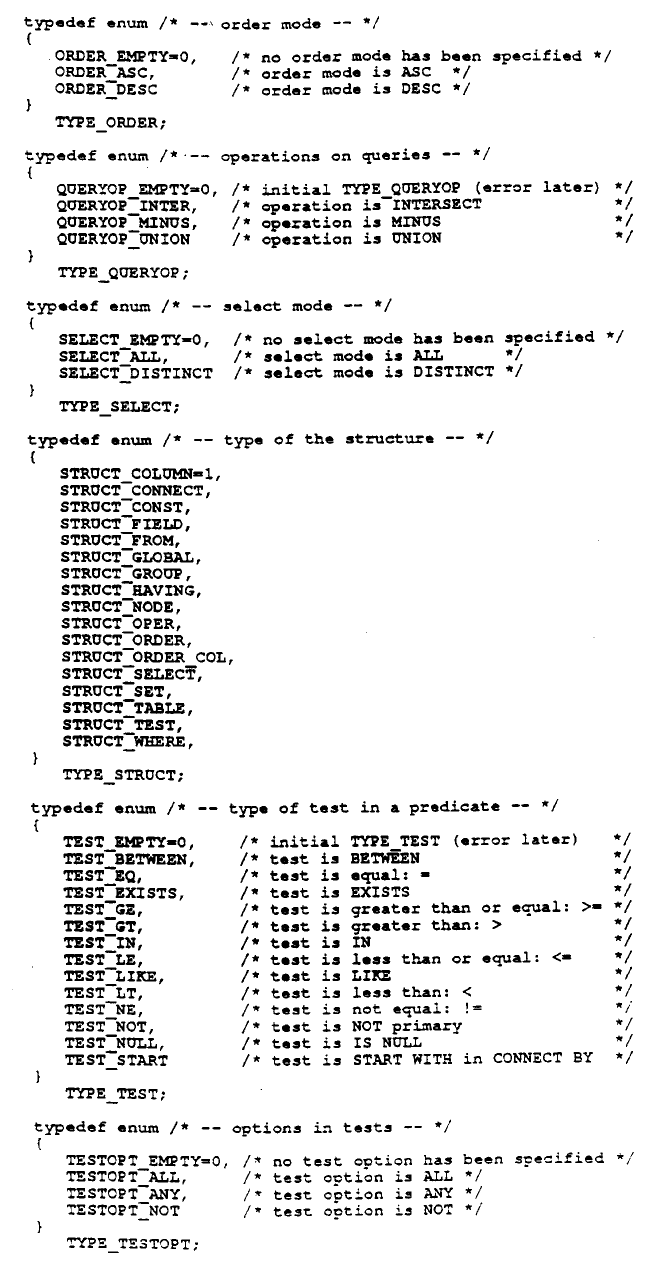

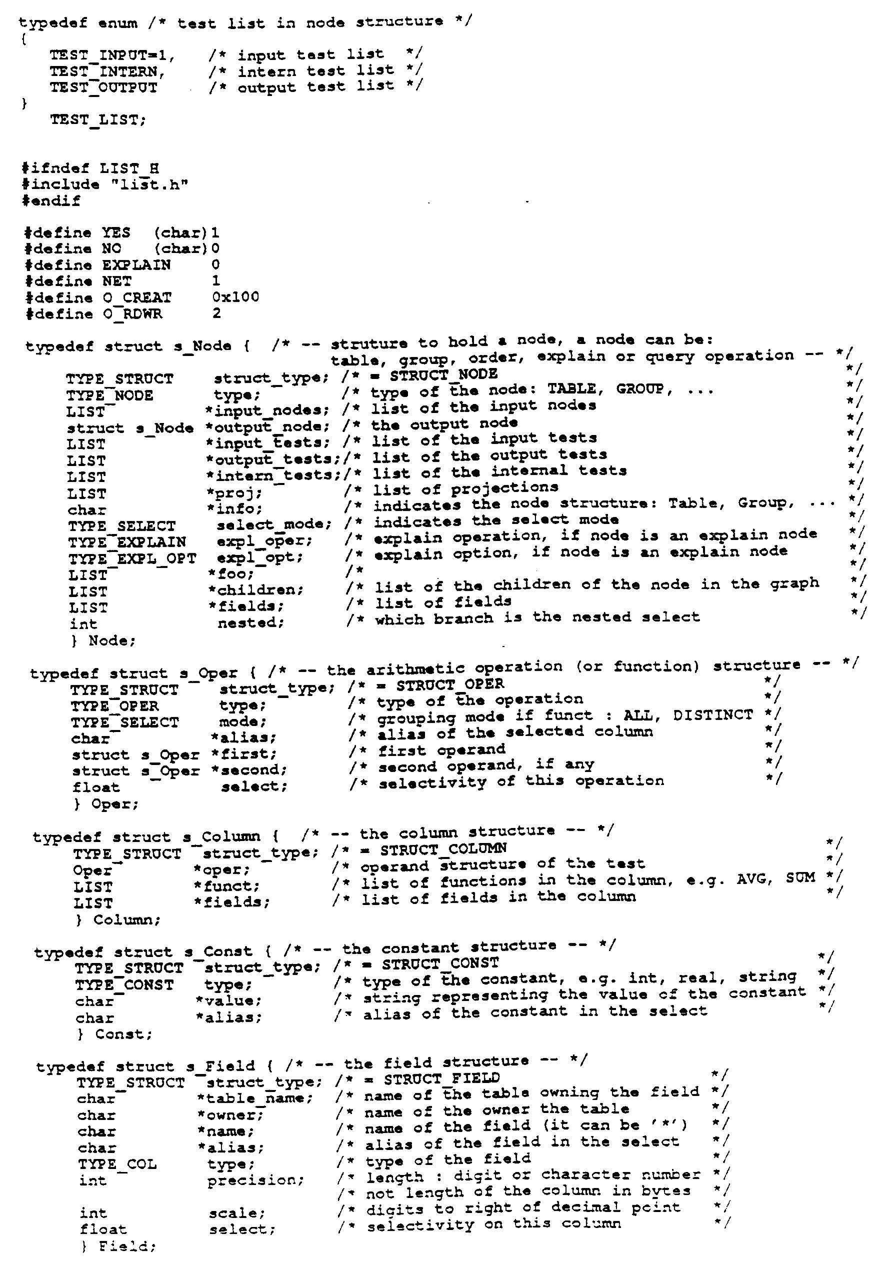

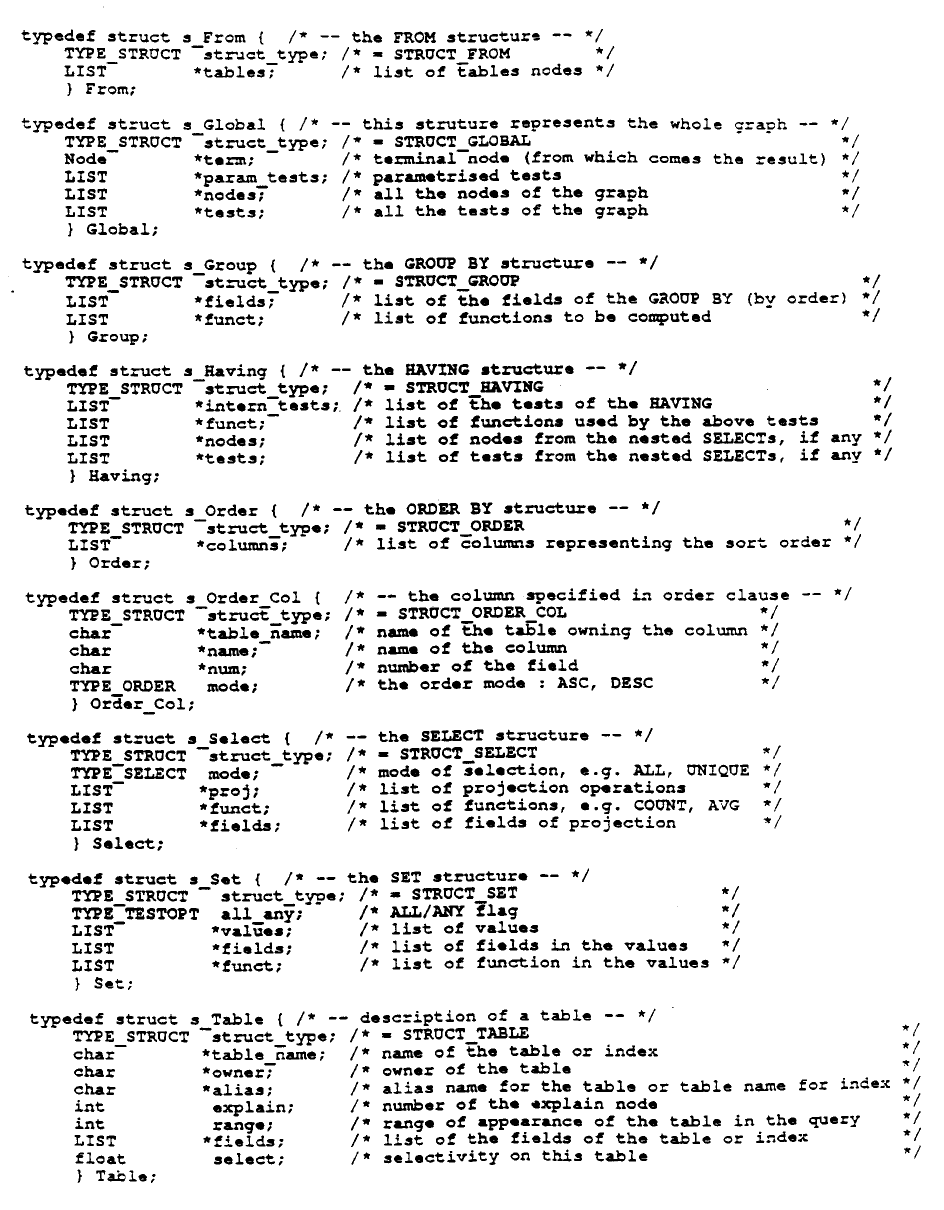

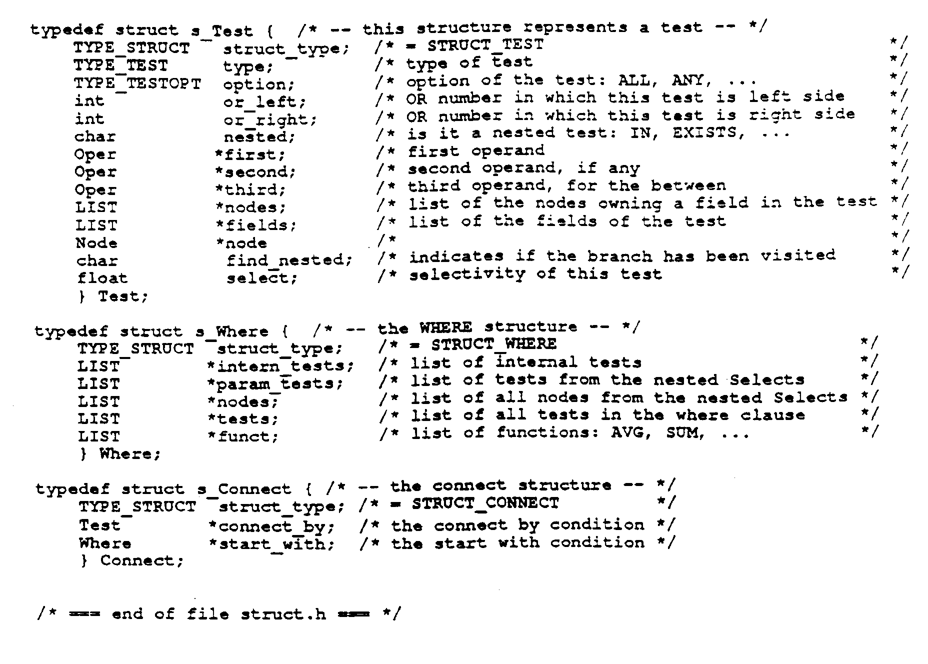

## Revendications

1. Procédé automatique d'aide à l'optimisation d'une requête (10) dans un système de gestion de base de données relationnel (SGBDR), le procédé utilisant des éléments représentatifs du plan d'exécution (11) de la requête, le plan d'exécution étant l'enchaînement des opérations à exécuter par ledit système (SGBDR) pour traiter la requête et la requête comprenant des éléments descriptifs incluant lesdits éléments et des éléments supplémentaires, caractérisé en ce qu'il consiste :
- à analyser lesdits éléments pour y sélectionner au moins lesdites opérations et pour déterminer les liens (28) entre lesdites opérations,
- à faire l'analyse syntaxique de la requête,
- à former un graphe syntaxique (30) à partir de l'analyse syntaxique, le graphe syntaxique comprenant tout ou partie des éléments descriptifs de la requête,
- à comparer lesdits éléments sélectionnés avec les éléments descriptifs de la requête contenus dans le graphe pour compléter lesdits éléments sélectionnés avec des éléments supplémentaires seulement contenus dans le graphe, et
- à visualiser sur un écran (25) un arbre (32) représentatif du plan d'exécution de la requête, l'arbre comprenant des boîtes (27) indiquant lesdits éléments sélectionnés, lesdits liens et, dans les boîtes correspondantes, lesdits éléments supplémentaires contenus dans le graphe.

2. Procédé selon la revendication 1, caractérisé en ce que l'analyse syntaxique de la requête est déterminée par le fonctionnement du système (SGBDR) pour déterminer notamment les types des noeuds du graphe syntaxique et de préférence des informations associées à ces types.

3. Procédé selon la revendication 2, caractérisé en ce que l'analyse syntaxique comprend la détermination des opérations exécutées par le système (SGBDR) et de l'ordre dans lequel ces opérations sont exécutées.

4. Procédé selon l'une des revendications 1 à 3, caractérisé en ce que la comparaison consiste à associer les noeuds relatifs auxdits éléments sélectionnés avec les noeuds du graphe syntaxique et à placer des projections et des tests sur les noeuds relatifs auxdits éléments sélectionnés.

5. Procédé selon la revendication 4, caractérisé en ce que l'association des noeuds consiste à distinguer les opérations prévisibles des opérations imprévisibles exécutées par le système (SGBDR), les opérations prévisibles étant celles qui se suivent dans le même ordre dans lesdits éléments sélectionnés et dans le graphe syntaxique tandis que les opérations imprévisibles apparaissent dans la requête dans un ordre non préservé parce que plusieurs algorithmes sont possibles à chaque fois, à associer les noeuds prévisibles relatifs auxdits éléments sélectionnés avec les noeuds prévisibles du graphe syntaxique, et à constituer avec les noeuds imprévisibles les liens entre les noeuds prévisibles associés.

6. Procédé selon la revendication 3, caractérisé en ce que le système (SGBDR) étant Oracle, l'ordre des opérations est successivement TABLE, GROUP, HAVING, UNION et ORDER.

7. Procédé selon la revendication 5, caractérisé en ce que le système (SGBDR) étant Oracle et l'opération prévisible étant TABLE ACCESS, il consiste à déterminer la table à laquelle fait référence cette opération.

## Claims

1. Automatic method for assisting with the optimisation of a query (10) in a relational database management system (SGBDR), the method using elements representing the execution plan (11) of the query, the execution plan being the chaining of operations to be executed by said system (SGBDR) in order to process the query and the query comprising descriptive elements including said elements and additional elements, characterised in that it comprises:
- analysing said elements in order to select therefrom at least said operations and to determine the links (28) between said operations,
- performing the syntactical analysis of the query,
- producing a syntactical graph (30) on the basis of the syntactical analysis, the syntactical graph comprising all or some of the descriptive elements of the query,
- comparing said selected elements with the descriptive elements of the query contained in the graph in order to supplement said selected elements with additional elements contained only in the graph, and
- displaying on a screen (25) a tree (32) representing the execution plan of the query, the tree comprising boxes (27) indicating said selected elements, said links and, in the corresponding boxes, said additional elements contained in the graph.

2. Method according to Claim 1, characterised in that the syntactical analysis of the query is determined by the operation of the system (SGBDR) so as to determine in particular the types of nodes of the syntactical graph and preferably the information associated with these types.

3. Method according to Claim 2, characterised in that the syntactical analysis comprises the determination of the operations executed by the system (SGBDR) and the order in which these operations are performed.

4. Method according to one of Claims 1 to 3, characterised in that the comparison comprises associating the nodes relating to said selected elements with the nodes of the syntactical graph and in placing projections and tests on the nodes relating to said selected elements.

5. Method according to Claim 4, characterised in that the association of the nodes comprises distinguishing the foreseeable operations from the unforeseeable operations executed by the system (SGBDR), the foreseeable operations being those that follow each other in the same order in said selected elements and in the syntactical graph whereas the unforeseeable operations appear in the query in an unpreserved order since several algorithms are possible each time, associating the foreseeable nodes relating to said selected elements with the foreseeable nodes from the syntactical graph, and constituting, together with the foreseeable nodes, the links between the associated foreseeable nodes.

6. Method according to Claim 3, characterised in that the system (SGBDR) being Oracle, the order of operations is, in succession, TABLE, GROUP, HAVING, UNION and ORDER.

7. Method according to Claim 5, characterised in that the system (SGBDR) being Oracle and the foreseeable operation being TABLE ACCESS, it consists in determining the table to which this operation refers.

## Patentansprüche

1. Automatisches Verfahren zur Unterstützung der Optimierung einer Anforderung (10) in einem Managementsystem für relationale Datenbanken (SGBDR), wobei das Verfahren Elemente verwendet, die die Ausführungsebene (11) der Anforderung repräsentieren, wobei die Ausführungsebene die Verknüpfung von durch das System (SGBDR) auszuführenden Operationen für die Verarbeitung der Anforderung ist und die Anforderung beschreibende Elemente umfaßt, die jene Elemente sowie zusätzliche Elemente enthalten, dadurch gekennzeichnet, daß es darin besteht:
- die Elemente zu analysieren, um daraus wenigstens jene Operationen auszuwählen und um die Verbindungen (28) zwischen diesen Operationen zu bestimmen,
- die Syntaxanalyse der Anforderung vorzunehmen,
- einen Syntaxgraphen (30) anhand der Syntaxanalyse zu bilden, wobei der Syntaxgraph einen Teil der oder alle beschreibenden Elemente der Anforderung enthält,
- die gewählten Elemente mit den beschreibenden Elementen der Anforderung, die in dem Graphen enthalten sind, zu vergleichen, um die gewählten Elemente mit den nur im Graphen enthaltenen zusätzlichen Elementen zu vervollständigen, und
- auf einem Bildschirm (25) einen Baum (32) anzuzeigen, der die Ausführungsebene der Anforderung repräsentiert, wobei der Baum Felder (27) enthält, die die gewählten Elemente, die Verbindungen, und in den entsprechenden Feldern die im Graphen enthaltenen zusätzlichen Elemente angeben.

2. Verfahren nach Anspruch 1, dadurch gekennzeichnet, daß die Syntaxanalyse der Anforderung durch den Betrieb des Systems (SGBDR) bestimmt wird, um insbesondere die Typen von Knoten des Syntaxgraphen und vorzugsweise diesen Typen zugeordnete Informationen zu bestimmen.

3. Verfahren nach Anspruch 2, dadurch gekennzeichnet, daß die Syntaxanalyse die Bestimmung der vom System (SGBDR) ausgeführten Operationen und die Reihenfolge, in der diese Operationen ausgeführt werden, enthält.

4. Verfahren nach einem der Ansprüche 1 bis 3, dadurch gekennzeichnet, daß der Vergleich darin besteht, den auf die gewählten Elemente bezogenen Knoten die Knoten des Syntaxgraphen zuzuordnen und Projektionen und Tests an den auf die gewählten Elemente bezogenen Knoten vorzusehen.

5. Verfahren nach Anspruch 4, dadurch gekennzeichnet, daß die Zuordnung der Knoten darin besteht, die vorhersehbaren Operationen von nicht vorhersehbaren Operationen, die vom System (SGBDR) ausgeführt werden, zu unterscheiden, wobei die vorhersehbaren Operationen jene sind, die in den gewählten Elementen und in dem Syntaxgraphen in derselben Reihenfolge aufeinanderfolgen, während die nicht vorhersehbaren Operationen in der Anforderung, da jedesmal mehrere Algorithmen möglich sind, in einer nicht beibehaltenen Reihenfolge erscheinen, die auf die gewählten Elemente bezogenen vorhersehbaren Knoten den vorhersehbaren Knoten des Syntaxgraphen zuzuordnen und mit den nicht vorhersehbaren Knoten Verbindungen zwischen den zugeordneten vorhersehbaren Knoten zu bilden.

6. Verfahren nach Anspruch 3, dadurch gekennzeichnet, daß die Reihenfolge der Operationen dann, wenn das System (SGBDR) Oracle ist, nacheinander TABLE, GROUP, HAVING, UNION und ORDER ist.

7. Verfahren nach Anspruch 5, dadurch gekennzeichnet, daß es dann, wenn das System (SGBDR) Oracle ist und die vorhersehbare Operation TABLE ACCESS ist, darin besteht, die Tabelle zu bestimmen, auf die diese Operation Bezug nimmt.
